# EUROPÄISCHE PATENTSCHRIFT

(11) **EP 3 962 792 B1**
(45) Veröffentlichungstag und Bekanntmachung des Hinweises auf die Patenterteilung: **22.11.2023**
(21) Anmeldenummer: 20700958.0
(22) Anmeldetag: 28.01.2020
(51) Int. Cl.: B60T 8/40

(54) **BREMSSYSTEM UND VERFAHREN ZUM STEUERN EINES BREMSSYSTEMS**
BRAKE SYSTEM AND METHOD FOR CONTROLLING A BRAKE SYSTEM
SYSTÈME DE FREINAGE ET PROCÉDÉ DE COMMANDE D'UN SYSTÈME DE FREINAGE

(30) Priorität: 03.05.2019 WO PCT/EP2019/061365; 03.05.2019 WO PCT/EP2019/061371
(43) Veröffentlichungstag der Anmeldung: 09.03.2022
(73) Patentinhaber: IPGate AG, 8808 Pfäffikon (CH)
(72) Erfinder: LEIBER, Heinz, 71739 Oberriexingen (DE); LEIBER, Thomas, 22203 Rogoznica (HR)
(74) Vertreter: Meissner Bolte Partnerschaft mbB
(86) Internationale Anmeldenummer: PCT/EP2020/051995
(87) Internationale Veröffentlichungsnummer: WO 2020/224814

(56) Entgegenhaltungen:
- EP-B1- 2 744 691
- WO-A1-2011/029812
- WO-A1-2012/055616
- WO-A1-2015/106892
- WO-A1-2016/120292
- WO-A1-2018/130393
- WO-A1-2019/002475
- WO-A2-2012/143175
- CN-A- 103 264 639
- DE-A1-102016 217 273
- JP-A- 2001 206 209

## Beschreibung

Die Erfindung betrifft ein Bremssystem sowie ein Verfahren zur Steuerung eines Bremssystems.

Der Trend zu Fahrzeugen, die zu einem autonomen Fahren ausgebildet sind, bedingt für das Bremssystem einerseits hohe Anforderungen an die Fehlersicherheit und andererseits redundante Funktionen, z. B. für eine Bremsdruckerzeugung, eine Spannungsversorgung und Rechnerfunktionen.

Favorisiert werden üblicherweise so genannte 1-Box- und 2-Box-Systeme. Letztere bestehen aus einem elektrischen Bremskraftverstärker (BKV), einem so genannten E-Booster, und einem ESP-System (englisch "Electronic Stability Control System").

Die bekannten Lösungen weisen relativ große Baulängen und/oder ein hohes Gewicht auf.

In der WO2011/098178 (nachfolgend als Variante A bzw. als Folgeverstärker oder E-Booster bezeichnet) ist eine Lösung mit koaxialem Antrieb beschrieben, in dem ein Elektromotor über ein Getriebe und Kolben auf den Hauptzylinderkolben (HZ-Kolben) wirkt. Die BKV-Steuerung erfolgt über ein elektrisches Glied und Reaktionsscheibe als so genannter Folgeverstärker, der Pedalweg ist eine Funktion des Bremsdruckes und der Volumenaufnahme des Bremssystems, was bei Fading oder Bremskreisausfall lange Pedalwege erfordert.

Die WO2009/065709 zeigt einen E-Booster ebenfalls mit Folgeverstärker-Funktion (nachfolgend als Variante B, bzw. als Folgeverstärker oder E-Booster bezeichnet). Hier erfolgt die BKV-Steuerung über einen Pedalweg und/oder über einen Pedaldruck, also den Druck, mit dem das Pedal betätigt wird. Eine getrennte Druckversorgung mit E-Motor und Plunger wirkt über den Verstärkerkolben auf den HZ-Kolben.

Die WO2012/019802 zeigt eine Anordnung ähnlich WO2011/098178 mit koaxialem Antrieb, in dem ein E-Motor über ein Getriebe und Kolben auf den HZ-Kolben wirkt (nachfolgend als Variante C bezeichnet). Hier ist eine zusätzliche Kolbenzylindereinheit eingesetzt, welche auf einen Wegsimulatorkolben (WS) wirkt. Damit ist der Pedalweg unabhängig von z. B. Fading und Bremskreisausfall. Der Aufwand und die Baulänge sind jedoch hoch.

Die DE 10 2009 033 499 zeigt einen Bremskraftverstärker mit zusätzlicher ESP-Einheit mit hydraulischer Betätigung des Verstärkerkolbens und außenliegender Druckversorgung (nachfolgend auch als Variante D bezeichnet). Diese Anordnung mit vier bzw. fünf Kolben und sechs Magnetventilen (MV) ist aufwändig und in der Baulänge ungünstig. Der nicht hydraulisch wirkende Wegsimulator (WS) liegt innerhalb der dem Hauptzylinder vorgebauten Kolben-Zylinder-Einheit und kann weder gedämpft noch über ein Magnetventil (MV) geschaltet werden.

Alle o. g. Lösungen haben eine redundante Bremskraftverstärkungsfunktion, da bei Ausfall des BKV-Motors die ESP-Einheit mit Pumpe ähnlich den Assistenzfunktionen mit Vakuum-BKV im autonomen Fahrbetrieb die Bremsfunktion gewährleistet.

Bei einem Ausfall des ESP-Motors kann das ABS über die Möglichkeit der Druckmodulation durch den BKV-Motor, wie in der WO2010/088920 beschrieben, weiterfunktionieren. Dies ermöglicht jedoch nur eine gemeinsame Druckregelung für alle vier Räder, was keinen optimalen Bremsweg zur Folge hat.

Alle bisher bekannten 1-Box-Systeme haben einen so genannten Wegsimulator (insbesondere für Brake-by-Wire), um eine fortschrittliche Pedalwegcharakteristik zu implementieren.

Die bekannten Systeme mit E-Booster und ESP haben nur eine Redundanz in der Druckversorgung, d. h. bei einem Ausfall des E-Boosters gibt es eine redundante Druckversorgung mit redundanter Leistung für die Bremskraftverstärkung durch das ESP. Höhere Anforderungen an die Sicherheit sind nicht berücksichtigt.

Das Packaging, also eine Anordnung der einzelnen Komponenten des Bremssystems zu einer einbaufertigen Einheit und ein Bauvolumen dieser Einheit sind von großer Bedeutung. Insbesondere bei Bremssystemen, die ihren Einsatz in Kraftfahrzeugen finden, die zu einem halbautomatisierten oder gar vollautomatisierten Fahren ausgebildet sind, sind viele Varianten mit z. B. einem Tandemhaupt(brems)zylinder oder einem Single-Haupt(brems)zylinder zu berücksichtigen. Beispiele für bekannte Packaging-Varianten sind eine senkrechte Anordnung einer Druckversorgungseinheit zu einer Achse des Haupt(brems)zylinders (wie beispielsweise in der EP 2 744 691 beschrieben) oder eine parallele Anordnung der Druckversorgungseinheit zu der Achse des Haupt(brems)zylinders (wie beispielsweise in der DE 10 2016 105 232 beschrieben). Letztere zeichnet sich speziell durch eine geringere Baubreite im Vergleich zu erstgenannter Packaging-Variante aus.

Aus den WO 2012 / 143 175 A2 und WO 2016 / 120 292 A1 sind KFZ-Bremsanlagen mit Tandemhauptbremszylindern bekannt, bei denen eine Möglichkeit zum Selbsttest der Bremsanlage besteht.

Die CN 103 264 639 A zeigt ein vollständig entkoppelndes mechanischelektrohydraulisches Verbundbremssystem bestehend aus einem Linearantrieb, einem kraftunterstützenden Hauptzylinder und einem Bremspedal, das über einen ansteuernden Zylinder über einen Hydraulikschlauch mit einem Pedalsimulator verbunden ist.

Die WO 2018 / 130 393 A1 beschreibt eine Bremsanlage für Fahrzeuge sowie ein Verfahren zum Betreiben der Bremsanlage, wobei der Hauptbremszylinder der Bremsanlage einkreisig mit lediglich einer Druckkammer ausgeführt ist.

Aus der JP 2001 / 206 209 A ist ein elektronisch gesteuertes Bremssystem bekannt mit zwei separaten Bremskreisen bekannt, welches bei einem detektierten Fehlerfall die Druckversorgung des fehlerhaften Bremskreises unterbricht.

### Aufgabe der Erfindung

Ausgehend vom Stand der Technik ist es eine Aufgabe der vorliegenden Erfindung ein verbessertes Bremssystem anzugeben.

Insbesondere liegt der Erfindung die Aufgabe zugrunde, ein Bremssystem für den Einsatz für einen autonomen Fahrbetrieb (nachfolgend auch als AD bezeichnet) und/oder E-Fahrzeuge/Hybridfahrzeuge mit zunehmend starker Rekuperationsleistung (Energierückgewinnung durch Bremsen über Generator/ bzw. Antriebsmotor im Generatorbetrieb) zu schaffen. Vorzugsweise wird das Gewicht verringert und/oder die Abmessungen des Systems verkleinert und/oder die Zuverlässigkeit erhöht.

Vorzugsweise soll ein kostengünstiges Bremssystem für den autonomen Fahrbetrieb geschaffen werden, das alle geforderten Redundanzen sowie eine sehr hohe Sicherheitsanforderung erfüllt.

Außerdem soll mit dem Bremssystem bei einem Ausfall von ESP sowohl eine im Bremsweg und Stabilität ausreichende Funktion von ABS, als auch eine ausreichende Funktion der Rekuperation erreicht werden.

Insbesondere ist es Aufgabe der vorliegenden Erfindung ein verbessertes Bremssystem mit einer redundanten Druckversorgung, sehr hohem Funktionsumfang und Verfügbarkeit, insbesondere bei Bremskreisausfall bei gleichzeitig sehr kurzer Baulänge und geringen Kosten anzugeben. Weiterhin soll ein Verfahren bereitgestellt werden, das eine sehr hohe Verfügbarkeit auch bei Teilausfällen/Leckagen ermöglicht.

### Lösung der Erfindung:

Diese Aufgabe wird erfindungsgemäß gelöst durch ein Bremssystem mit den Merkmalen des Anspruches 1 und ein Verfahren mit den Merkmalen des Anspruchs 14. Vorteilhafte Ausgestaltungen, Weiterbildungen und Varianten sind Gegenstand der Unteransprüche.

Die Aufgabe wird insbesondere durch ein Bremssystem gelöst, umfassend die Merkmale des Anspruchs 1.

Unter der Druckversorgungseinheit kann allgemein eine Einheit, insbesondere eine Baueinheit, des Bremssystems verstanden werden, die einen Bremsdruck bereitstellt. Die Druckversorgungseinheit dient also einer Beaufschlagung des zumindest einen Bremskreises mit dem Druckmittel.

Weiterhin weist das Bremssystem eine Ventileinheit auf. Die Ventileinheit ist hierbei als eine hydraulische Ventileinheit ausgebildet. Insbesondere weist die Ventileinheit mindestens ein als Magnetventil ausgebildetes Einspeisventil auf. Magnetventile haben sich insbesondere durch ihre einfache Ansteuerbarkeit als vorteilhaft erwiesen.

Das Einspeisventil kann als stromlos offenes Ventil ausgeführt sein.

Im Normalbetrieb kann es geschlossen sein, so dass aus der zweiten Druckversorgungseinheit kein Druckmittel in einen der beiden Bremskreise gelangt. Bei einem Ausfall des Systems kann über das Einspeisventil der erste und/oder der zweite Bremskreis mit Druck beaufschlagt werden, so dass eine Notbremsung gegebenenfalls möglich ist.

An dieser Stelle sei darauf hingewiesen, dass das Einspeisventil wie bei allen driveby-wire Systemen, sehr sicherheitskritisch ist. Bei einem Ausfall wirkt die erste Druckversorgungseinheit bzw. der von dieser erzeugte Druck im Zylinder der zweiten Druckversorgungseinheit direkt der Pedalkraft entgegen. Durch das Verschieben des Kolbens der zweiten Druckversorgungseinheit wird die erste Druckversorgungseinheit deaktiviert. Der Fahrer muss die notwendige Bremskraft mit dem Pedal aufbringen. Bei einem System, das lediglich die gesetzlichen Vorgaben einhält, entspricht das 500 N (entspricht 40 bis 50 bar). Dies kann zu einer Irritation des Fahrers ggf. zu einem Unfall führen.

Die als Trennventile und Einlassventile verwendeten stromlos-offenen Magnetventile verfügen über eine Rückstellfeder mit zwei Anschlüssen. Ein der Anschlüsse mündet in den Ankerraum und wird in dieser Anmeldung als Ankeraum-Anschluss bezeichnet. Der weitere Anschluss ist hinter dem Ventilsitz angeordnet und wird nachfolgend als Ventilsitz-Anschluss bezeichnet. Im geschlossenen Zustand wirkt der Druck des Ventilsitz-Anschlusses der Magnetkraft, die durch das Ventil aufgebracht wird, entgegen. Das Ventil ist aber so ausgelegt, dass den notwendigen Drücken standgehalten wird.

Vorzugsweise ist das Einspeisventil derart ausgebildet und angeordnet, dass es gegenüber hohen Drücken im Bremssystem, insbesondere in dem ersten und zweiten Bremskreis, im geschlossenen Zustand sicher geschlossen ist.

Hierfür ist das Einspeisventil in einer Ausführungsform über den Ventilsitz-Anschluss mittelbar an die erste Hydraulikleitung angeschlossen.

Unter zumindest teilweise absperrbar kann hierbei verstanden werden, dass das Ventil beispielsweise nach Art einer Drossel lediglich einen Volumendurchfluss (an Druckmittel) durch die Hydraulik-Versorgungsleitung begrenzt. Weiterhin kann alternativ oder ergänzend hierzu das Ventil den Volumendurchfluss vollständig unterbinden. Unter reversibel kann hierbei verstanden werden, dass das Ventil steuerbar geschlossen und geöffnet werden kann. Hierzu ist das zumindest eine Ventil vorzugsweise als ein Magnetventil ausgebildet. In einer weiteren Ausführungsform weist die Ventileinheit mehrere Ventile auf, die als Magnetventile ausgebildet sind.

Erfindungsgemäß ist mindestens ein Trennventil in der ersten und/oder zweiten Hydraulikleitung vorgesehen, über das die jeweilige Hydraulikleitung zumindest teilweise reversibel absperrbar ist. Das mindestens eine Trennventil kann die Funktion haben, den ersten und den zweiten Bremskreis voneinander hydraulisch zu entkoppeln. Somit ist es möglich, in einem Ausfallszenario Druckmittel aus der ersten Druckversorgung selektiv in einen Bremskreis oder in beide Bremskreise einzubringen. Weiterhin kann bei einem Ausfall der ersten Druckversorgung ausgewählt werden, ob das Druckmittel aus der zweiten Druckversorgung ausschließlich in einen Bremskreis oder in beide Bremskreise gelangen soll.

Ein Vorteil des erfindungsgemäßen Bremssystems ist in einer kompakteren Bauweise und -form des Bremssystems im Vergleich zu den Bremssystemen gemäß dem Stand der Technik zu sehen. Insbesondere wird dieser Vorteil dadurch erreicht, dass im Vergleich zu den Bremssystemen gemäß dem Stand der Technik auf eine weitere Druckversorgungseinheit und einen Tandembremszylinder verzichtet werden kann. Weiterhin wird ein Funktionsumfang sowie eine (beispielsweise durch Normen vorgegebene) Ausfallsicherheit garantiert. Dadurch, dass das Bremssystem kompakter baut, ist ein Einsatzbereich des Bremssystems vorteilhaft optimiert. Unter dem Einsatzbereich wird hierbei beispielsweise zum einen eine örtliche Anordnung des Bremssystems z. B. innerhalb eines Kraftfahrzeuges sowie zum anderen eine modulare Ausgestaltung des Bremssystems verstanden, um unterschiedlichen Leistungsanforderungen an das Bremssystem gerecht zu werden.

In einer Ausführungsform besteht das Bremssystem aus zwei hydraulischen Modulen. Vorzugsweise sind die Module räumlich getrennte separate Baueinheiten und werden über zwei hydraulische Leitungen verbunden. Die zwei hydraulischen Leitungen bilden die hydraulischen Schnittstellen. Es ist aber auch möglich, beide Module in einer Baueinheit zu integrieren.

Das erste Modul (nachfolgend auch als "X-Boost" bezeichnet) kann die erste Druckversorgungseinheit mit dem elektromotorischen Antrieb, die zweite Druckversorgungseinheit sowie eine Ventileinrichtung umfassen. Die zweite Druckversorgungseinheit kann als Hauptbremszylinder mit einer Betätigungseinheit, insbesondere einem Bremspedal, ausgeführt sein.

Das zweite Modul kann in einer Ausführungsform eine elektrisch angetriebene Motor-Pumpen-Einheit (nachfolgend auch als "ESP-Einheit" bezeichnet) umfassen. Die Motor-Pumpen-Einheit dient als Druckversorgung und beaufschlagt mindestens einen Bremskreis, vorzugsweise beide Bremskreise mit Druckmittel.

Die Module des erfindungsgemäßen Bremssystems können dazu ausgebildet sein, folgende Funktionen umsetzen:
Erstes Modul (X-Boost):
   - Bremskraftverstärkung mit variabler Bremskraftverstärkung über Auswertung von Sensorik der Betätigungseinheit;
   - Blending bei Rekuperation von Bremsenergie durch Generator bzw. elektrische Antriebsmotoren im Generatorbetrieb wahlweise achsindividuell bei Einsatz von mehreren Antriebsmotoren an Vorder- und Hinterachse;
   - Notbremsfunktion (AEB) mit hochdynamischem Druckaufbau durch die erste Druckversorgungseinheit;
   - Steuerung des variablen Lüftspiels einer reibungsfreien Bremse;
   - Fahrerassistenzfunktionen (DAS) wie z. B. automatische Abstandskontrolle;
   - Sekundärsystem oder alternativ Primärsystem zur Ansteuerung der elektrischen Parkbremse EPB zum Verriegeln und Entriegeln;
   - Sekundär- oder Primärsystem zur Giermomentregelung (ESP, Torque Vectoring, Lenkungseingriffe) durch gezielte bremskreisindividuelle Bremsdruckerzeugung; und/oder
   - Sekundär- oder Primärsystem zur elektrischen Bremskraftverteilung EBV.
Zweites Modul (ESP-Einheit):
   - Antiblockierregelung ABS;
   - Anti-Schlupfregelung ASR;
   - elektrische Bremskraftverteilung EBV,
   - Giermomentregelung (ESP-Funktion, Torque Vectoring, Lenkungseingriffe) durch gezielte radindividuelle Bremsdruckerzeugung,
   - Bremskraftverstärkung als Primärsystem bei höheren Drücken oberhalb des Blockierdruckes, z. B. bei Fading,
   - Bremskraftverstärkung als Sekundärsystem mit variabler Bremskraftverstärkung mittels Fahrerwunscherkennung über Auswertung von Sensorik der Betätigungseinheit;
   - Primärsystem oder alternativ Sekundärsystem zur Ansteuerung einer elektrischen Parkbremse EPB zum Verriegeln und Entriegeln;
   - weitere Funktionen, die in ESP-Einheiten umgesetzt werden.

Das Bremssystem ist insbesondere als ein Bremssystem für ein Personenkraftfahrzeug ausgebildet. Bei dem Druckmittel handelt es sich bevorzugt um ein Bremsfluid, welches allgemein auch als Bremsflüssigkeit bezeichnet wird.

Eine Komponente eines elektromotorischen Antriebs ist bekanntlich ein Motorsensor für eine elektronische Kommutierung und Steuerung einer Position eines Kolbens der ersten Druckversorgungseinheit. Der elektromotorische Antrieb kann mit verschiedenen Antriebsarten, z. B. über ein Getriebe, insbesondere über eine Trapezspindel oder über eine Spindel eines Kugel-Gewinde-Triebes kombiniert werden.

Erfindungsgemäß können verschiedene Sensortypen wie z. B. Segmentsensoren mit induktiven oder auch magnetfeldempfindlichen Sensoren zum Einsatz kommen oder aber Sensoren, welche in der Motor- oder Getriebeachse angeordnet sind. Diese sind besonders einfach im Aufbau, weisen typischerweise ein Target (zwei- oder mehrpoliger Magnet) sowie ein magnetfeldempfindliches Sensorelement (Hall-Sensor, GMR u.a.) auf. Diese Sensoren sind elektrisch mit einer Motorsteuereinheit verbunden, welche an vorzugsweise dem elektromotorischen Antrieb angeordnet ist, teilweise über ein Zwischengehäuse. Der Sensor ist vorzugsweise in einem Sensorgehäuse auf einer Sensorleiterplatte untergebracht.

In einer Ausführungsform ist das erste Trennventil als ein stromlos offenes Trennventil ausgeführt.

In der zweiten Hydraulikleitung kann mindestens ein zweites Trennventil angeordnet sein. Das zweite Trennventil ermöglicht ein reversibles Unterbrechen der zweiten Hydraulikleitung derart, dass Druckmittel aus der ersten Druckversorgung ausschließlich in den ersten Bremskreis gelangen kann. Aus Sicht der ersten Druckversorgung kann mittels des ersten und des zweiten Trennventils ausgewählt werden, ob das Druckmittel aus der ersten Druckversorgung a) ausschließlich in den ersten Bremskreis, b) ausschließlich in den zweiten Bremskreis oder c) in beide Bremskreise gelangt.

Die Anordnung des zweiten Trennventils ist besonders vorteilhaft in Verbindung mit einem dritten Trennventil. Dieses dritte Trennventil kann derart in der ersten Hydraulikleitung angeordnet und ausgebildet sein, dass in einem geschlossenen Zustand des dritten Trennventils Druckmittel aus der zweiten Druckversorgung ausschließlich in den zweiten Bremskreis gelangt. Erfindungsgemäß kann das dritte Trennventil also derart ausgebildet und angeordnet sein, dass es den Zulauf in den ersten Bremskreis vollständig verschließt, so dass der zweite Bremskreis über die erste und/oder zweite Druckversorgung mit Druck versorgt werden kann. An dieser Stelle sei darauf hingewiesen, dass die Begriffe des ersten und des zweiten Bremskreises willkürlich gewählt sind. Anstelle des ersten Bremskreises kann der zweite Bremskreis treten und anstelle des zweiten Bremskreises der erste.

In einer Ausführungsform ist das zweite Trennventil derart angeordnet ist, dass ein Ventilsitz-Anschluss des zweiten Trennventils hydraulisch mit dem zweiten Bremskreis verbunden ist und/oder
das dritte Trennventil derart angeordnet ist, dass ein Ventilsitz-Anschluss des dritten Trennventils hydraulisch mit dem ersten Bremskreis verbunden ist und/oder
das erste Trennventil derart angeordnet ist, ein Ventilsitz-Anschluss des ersten Trennventils hydraulisch mit dem zweiten Trennventil und über das/ein viertes Trennventil mit der ersten Druckversorgungseinheit verbunden ist.

Das erste Trennventil und/oder das zweite Trennventil können gemäß einem Aspekt der Erfindung stromlos-offene Ventile sein.

Die zweite Druckversorgungseinheit kann einen Hauptzylinder sowie einen innerhalb des Hauptzylinders einsitzenden Kolben aufweisen.

Mit der erfindungsgemäßen Lösung wird ein Bremssystem bereitgestellt, das hinsichtlich seines Bauvolumens und Bauraums optimiert ist. Zugleich wird eine Flexibilität hinsichtlich einer Modulgestaltung des Bremssystems vorteilhaft optimiert. Unter der Modulgestaltung des Bremssystems wird in einer Ausführungsform eine modulartige Bauweise des Bremssystems durch unterschiedlich leistungsstarke Komponenten und/oder eine Variation einer Anordnung einer Komponente innerhalb des Bremssystems verstanden, um unterschiedlichen Leistungs- sowie Bauraumvorgaben für unterschiedliche Kraftfahrzeuge gerecht zu werden.

In einer Ausführungsform ist ein Wegsimulator vorgesehen, der mit der zweiten Druckversorgungseinheit hydraulisch verbunden ist.

Dieser Ausgestaltung liegt der Gedanke zugrunde, dass mittels des Wegsimulators ein haptisches Feedback an den Fahrer ausgegeben werden soll, wenn dieser ein Bremspedal betätigt.

Unter dem Wegsimulator kann in einer einfachsten Ausgestaltungsform ein Wegsimulatorzylinder mit einem darin einsitzenden Wegsimulatorkolben verstanden werden, der mittels eines zwischen einer Innenwand und dem Wegsimulatorkolben angeordneten Federelements federkraftbeaufschlagt ist. Der Wegsimulatorzylinder ist vorzugsweise mittels einer hydraulischen Leitung mit der zweiten Druckversorgungseinheit verbunden. Während einer Betätigung des Bremspedals wird ebenfalls der Wegsimulatorzylinder mit Druckmittel beaufschlagt, sodass der Wegsimulatorkolben entgegen der Richtung der Federkraft des Federelements verfahren wird. Aufgrund der progressiven Federkraft, spürt der Fahrer in einer Ausführungsform einen steigenden Pedaldruck, da die Federkraft des Federelements mittelbar der Kraft, mit der der Fahrer das Bremspedal betätigt, entgegenwirkt.

Auch ist es vorteilhaft, wenn in einer Weiterbildung der Wegsimulator - mittels eines Schaltventils abschaltbar ist und bei einer Betätigung des Bremspedals entlang eines ersten Bereichs nicht wirksam ist und die Bremspedalkraft ausschließlich durch eine Rückstellfeder bestimmt wird. Unter dem ersten Bereich wird hierbei beispielsweise eine erste Hälfte eines Pedalweges nach Beginn einer Betätigung bei einem Bremsvorgang verstanden. Mit anderen Worten entspricht der erste Bereich beispielsweise einem (Weg-)Bereich zwischen einem nicht gedrückten Bremspedal und einem halb durchgedrückten Bremspedal. In einem zweiten Bereich wird dann die Bremspedalkraft durch Rückstellfeder und Wegsimulatorkolben bestimmt. Unter dem zweiten Bereich wird hierbei beispielsweise eine zweite Hälfte des Pedalweges verstanden, also der (Weg-) Bereich zwischen halb durchgedrücktem Bremspedal und voll durchgedrücktem Bremspedal. Bei der Rückstellfeder handelt es sich hierbei insbesondere nicht um das innerhalb des Wegsimulatorzylinders angeordnete Federelement. Vielmehr handelt es sich bei der Rückstellfeder um ein zusätzliches Federelement, welches bevorzugt mit einem Ende an dem Wegsimulatorzylinder und mit dem anderen Ende an dem Wegsimulatorkolben angeordnet ist, insbesondere befestigt ist.

Zur weiteren Reduzierung des Bauvolumens des Bremssystems kann alternativ in einem flachen Teil der Pedalwegkennlinie - also in dem Teil, in dem eine geringe Rückstellkraft auf das Bremspedal wirkt - die Rückstellfeder eingesetzt werden, sodass das Volumen im Wegsimulator kleiner ist und nur noch dem progressiven Teil der Kennlinie entspricht, wie auch in WO2013/072198 der Anmelderin dargestellt, auf die insoweit hier Bezug genommen wird.

Zur weiteren Absicherung kann der Wegsimulator vorzugsweise redundante Dichtungen umfassen. Erfindungsgemäß kann ein Wegsimulatorabsperrventil vorgesehen sein. Es kann aber auch auf ein Wegsimulatorabsperrventil verzichtet werden.

In einer Ausführungsform umfasst das Bremssystem ein viertes Trennventil, mittels dessen die erste und zweite Hydraulikleitung (gleichzeitig) reversibel von der ersten Druckversorgung trennbar ist. Das vierte Trennventil kann dazu dienen, die Bremskreise, insbesondere die erste und zweite Hydraulikleitung bei einem Ausfall hydraulisch von der ersten Druckversorgung zu trennen. Dies verhindert, dass die erste Druckversorgung Druckmittel aufnehmen kann, das nicht zum Bremsen in den Bremskreisen zur Verfügung steht. Das vierte Trennventil kann stromlos geschlossen ausgeführt sein.

In einer Ausführungsform verfügt die erste Druckversorgung über ein selbsthemmendes Getriebe, das einen Volumenverlust in dem besagten Szenario vermeidet.

Weiterhin kann das vierte Trennventil dazu eingesetzt werden, um Volumen aus einem Vorratsbehälter ggf. gezielt in einen der Bremskreise nachzufördern. Hierfür saugt die erste Druckversorgung Volumen bei geschlossenem vierten Trennventil an.

Das Bremssystem kann mindestens ein Druckbegrenzungsventil für den Bauteilschutz umfassen. Das Druckbegrenzungsventil kann in einer Ausführungsform in fluider Verbindung mit der ersten Druckversorgungseinheit, insbesondere deren Arbeitsraum, stehen. Aufgrund dieses Überdruckschutzes kann die erste Druckversorgung auf 80-100 bar ausgelegt sein. Eine stärkere Auslegung würde dazu führen, dass die erste Druckversorgung deutlich größer dimensioniert sein müsste. Das mindestens eine Druckbegrenzungsventil verhindert, dass beispielsweise im ABS-Betrieb die erste Druckversorgung geschädigt wird.

Die Trennventile können Magnetventile und/oder Zweiwegeventile sein.

Die erste und/oder zweite Hydraulikleitung können über (jeweils eigene) Saugventile mit dem Vorratsbehälter verbunden sein. Diese Saugventile dienen zum schnellen Nachsaugen von Druckmitteln, beispielsweise dann, wenn die Motor-Pumpen-Einheit mehr Volumen benötigt. Dies kann besonders vorteilhaft sein, wenn sich die Motor-Pumpen-Einheit in einem Stand-alone-Betrieb befindet, d. h. die erste Druckversorgung zur Nachförderung von Volumen nicht zur Verfügung steht.

Es ist denkbar die zweite Druckversorgungseinheit elektromotorisch für Redundanzzweck zu betreiben. In einer bevorzugten Ausführungsform ist an der zweiten Druckversorgungseinheit das Betätigungselement angeordnet. Bei dem Betätigungselement handelt es sich beispielsweise um das bereits vorstehend bei den Ausführungen zum Wegsimulator aufgeführte Bremspedal, welches von einem Fahrer des Kraftfahrzeuges betätigbar ist. Speziell ist das Betätigungselement an dem Hilfskolben der zweiten Druckversorgungseinheit angeordnet. Mittels des Betätigungselements ist somit der Hilfskolben betätigbar. Mit anderen Worten wird der Hilfskolben bei einem Betätigen des als Bremspedal ausgebildeten Betätigungselements derart in den Hauptbremszylinder verschoben, dass das Druckmittel aus diesem und somit aus der zweiten Druckversorgungseinheit herausgepresst wird.

In einer Ausführungsform umfasst die zweite Druckversorgungseinheit einen (einzigen) Hauptbremszylinder bzw. Zylinder mit einem einzigen mittels des Bestätigungselements betätigbaren Kolben umfasst. Die zweite Druckversorgung umfasst also vorzugsweise einen "Single Kolben-Zylinder" mit nur einem einzigen Arbeitsraum in dem ein einziger Kolben gehaltert ist.

In einer Ausführungsform weisen die zweite Druckversorgungseinheit und/oder der Wegsimulator jeweils zwei Dichtelemente auf, die redundant ausgebildet sind. Unter redundant wird hierbei verstanden, dass jeweils eines der beiden Dichtelemente bei einem Ausfall des jeweils anderen Dichtelements eine Dichtigkeit der jeweiligen Komponente und somit deren Funktionsfähigkeit sicherstellt. Die Dichtelemente sind hierbei vorzugsweise als Ringdichtungen ausgebildet.

Erfindungsgemäß können alle funktionswichtigen Dichtungen redundant ausgeführt sein. Undichtigkeiten können während eines Bremsvorgangs beispielsweise im Rahmen einer Diagnose ermittelt werden. Damit wird ein hohes Sicherheitsniveau für "Fail Operational" erreicht.

In einer Ausführungsform ist ein Vorratsbehälter bzw. Reservoir zur Aufnahme des Druckmittels vorgesehen. Der Vorratsbehälter ist mit der ersten Druckversorgungseinheit sowie mit der zweiten Druckversorgungseinheit hydraulisch mittels Hydraulikleitungen verbunden. In einer Ausführungsform ist der Vorratsbehälter zusätzlich noch über jeweils eine weitere Hydraulikleitung mit der ersten Hydraulikleitung und mit der zweiten Hydraulikleitung verbunden. Alle oder einige Hydraulikleitungen zum Vorratsbehälter können Saugventile umfassen.

Der Vorratsbehälter weist in einer Ausführungsform zudem ein Sensorelement, insbesondere einen Niveausensor auf, das dazu ausgebildet ist, einen Füllstand des Druckmittels innerhalb des Vorratsbehälters zu erfassen. Der Niveausensor kann einen Schwimmer aufweisen, welcher im Vorratsbehälter innerhalb des Druckmittels angeordnet ist, also im Druckmittel "schwimmt" und in Abhängigkeit des Füllstands des Druckmittels ein Sensorsignal erzeugt oder bei einer Änderung des Füllstands des Druckmittels eine Änderung eines (dauerhaften) Sensorsignals hervorruft.

In einer Ausführungsform ist die Position des Schwimmers drahtlos erfassbar. Beispielsweise kann der Schwimmer einen Magneten umfassen, dessen Position auf Grund dessen Magnetfelds erfassbar ist. Das zugehörige Sensormittel umfasst beispielsweise ein oder mehrere Magnetfeldsensoren, die auf einer Leiterplatine bzw. Leiterplatine unmittelbar neben dem Vorratsbehälter angeordnet sind. In einer Ausführungsform handelt es sich bei der Leiterplatine um das PCB.

Gemäß einer Ausführungsform weist der elektromotorische Antrieb einen redundanten 3-phasigen elektrischen Anschluss auf. Hierüber ist der elektromotorische Antrieb angesteuert. Eine Ansteuerung des Antriebs kann gemäß einem der aus dem Stand der Technik bekannten Verfahren erfolgen.

Durch den 2x3-Phasenanschluss des Motors der ersten Druckversorgungseinheit kann auch bei Teilausfall des Motors noch mit 50% des Drehmomentes ein Druck aufgebaut werden. Damit kann ein Bremsdruck von bis zu 40-50 bar erzeugt werden, der ein sicheres Abbremsen des Fahrzeugs auch bei diesem Teilausfall gewährleistet.

In einer Ausführungsform sind an den Radbremsen elastische Elemente, insbesondere Federelemente, für eine Belagrückführung der Radbremsen vorgesehen. Vorzugsweise wirken die Federelemente bzw. elastischen Elemente so, dass die Bremsbeläge von der Bremsscheibe abheben (Lüftspiel), sobald in dem Bremskreis kein Druck mehr aufgebaut ist. Bei dem Federelement kann es sich um eine (starke) Rollbackdichtung der Radbremse handeln. Dies hat den Vorteil, dass sich keine Rückwirkung auf das Bremspedal ergibt.

Die typische Reibverlustleistung bedingt durch anliegende Bremsbeläge an den Scheibenbremsen liegt bei Serienbremsanlagen bei 100-300 Watt und hat bei E-Fahrzeugen einen signifikanten Einfluss auf die Reichweite bzw. Batteriekapazität. Da die Batteriekosten bei reinen Elektrofahrzeugen ein sehr großer Kostenfaktor sind, hat die reibungsfreie Bremse sehr große Auswirkungen auf die Gesamtkosten eines Fahrzeuges. Eine reibungsfreie oder reibungsarme Bremse kann z. B durch eine starke Rollbackdichtung in den Bremsbelägen ermöglicht werden. Das Lüftspiel variiert mit dem Verschleiß der Bremsbeläge und nimmt bei steigender Betriebszeit zu.

Wie erläutert, wird mit der Erfindung eine kompakte Bauform des Bremssystems und insbesondere des Bremskraftverstärkers mit geringem Bauvolumen erreicht, welcher sehr kurz und schmal baut sowie Redundanzen, z. B. für Druckerzeugung, elektrische Versorgung sowie Ausfall des Pumpenmotors der ABS/ESP-Einheit aufweist. Weiterhin kann auch bei einem Ausfall der ESP-Einheit eine ABS-Funktion mit reduzierter Leistungsfähigkeit ermöglicht werden. Die ABS-Funktion stellt somit im Notbetrieb ohne ESP zumindest eine achsweise individuelle Regelung zur Verbesserung des Bremswegs dar ("Select-low"-Druckregelung).

In einer Ausführungsform ist die erste Druckversorgungseinheit mit einer ersten Kolbenzylindereinheit, und die zweite Druckversorgungseinheit mit einer zweiten Kolbenzylindereinheit derart in einem Gehäuse angeordnet, dass eine Längsachse der ersten Kolbenzylindereinheit im Wesentlichen senkrecht zu einer Längsachse der zweiten Kolbenzylindereinheit verläuft. Die Längsachsen können auf zwei benachbarten Ebenen angeordnet sein. Durch diese Anordnung kann ein sehr kompaktes erstes Modul hergestellt werden. Erfindungsgemäß kann eine im Wesentlichen senkrechte Anordnung eine Anordnung sein, bei der die Achsen im Vergleich zum 90°-Winkel um maximal ±15° abweichen. Vorzugsweise ist die Anordnung der Kolbenzylindereinheiten derart, dass sie hydraulisch voneinander abgegrenzt sind.

Die eingangs genannte Aufgabe wird ebenso durch ein Verfahren zum Steuern eines Bremssystems gelöst. Bei dem Bremssystem kann es sich um eines der Bremssysteme handeln, wie diese vorab bereits erläutert wurden. Das Verfahren umfasst die nachfolgenden Schritte:
a) Bereitstellen eines ersten Drucks an einem ersten Anschlusspunkt zur Verbindung mit einem ersten Bremskreis;
b) Bereitstellen eines zweiten Drucks an einem zweiten Anschlusspunkt zur Verbindung mit einem zweiten Bremskreis;
c) Detektion eines Fehlerfalls, insbesondere den Verlust von Druckmittel und/oder den Ausfall einer Druckversorgung;
d) Verschließen mindestens eines ersten Trennventils in Reaktion auf die Detektion des Fehlerfalls derart, dass eine erste Druckversorgungseinheit hydraulisch von dem ersten Anschlusspunkt entkoppelt ist.

Es ergeben sich ähnliche Vorteile, wie diese bereits in Verbindung mit der Vorrichtung besprochen wurden.

Das Verfahren kann den Schritt des Öffnens eines Einspeisventils derart umfassen, dass der erste Anschlusspunkt in fluider Verbindung mit einer zweiten Druckversorgungseinheit steht. Das Öffnen des Einspeisventils kann ebenfalls in Reaktion auf die Detektion eines Fehlerfalls erfolgen.

Mehrere Ausführungsbeispiele der Erfindung werden nachfolgend anhand der Figur näher erläutert. Diese zeigt in teilweise stark vereinfachter Darstellung:
- Fig. 1: ein Prinzipschaltbild eines ersten Ausführungsbeispiels des erfindungsgemäßen Bremssystems mit zwei Trennventilen und einem Einspeisventil;
- Fig. 2: ein Prinzipschaltbild eines zweiten Ausführungsbeispiels des erfindungsgemäßen Bremssystems mit vier Trennventilen und einem Einspeisventil;
- Fig. 3: ein Prinzipschaltbild einer Abwandlung des ersten Ausführungsbeispiels;
- Fig. 4: ein Prinzipschaltbild eines weiteren Ausführungsbeispiels des erfindungsgemäßen Bremssystems;
- Fig. 5a, 5b: schematische Seitenansichten einer Baueinheit des Bremssystems;
- Fig. 6: ein Prinzipschaltbild einer ESP-Einheit.

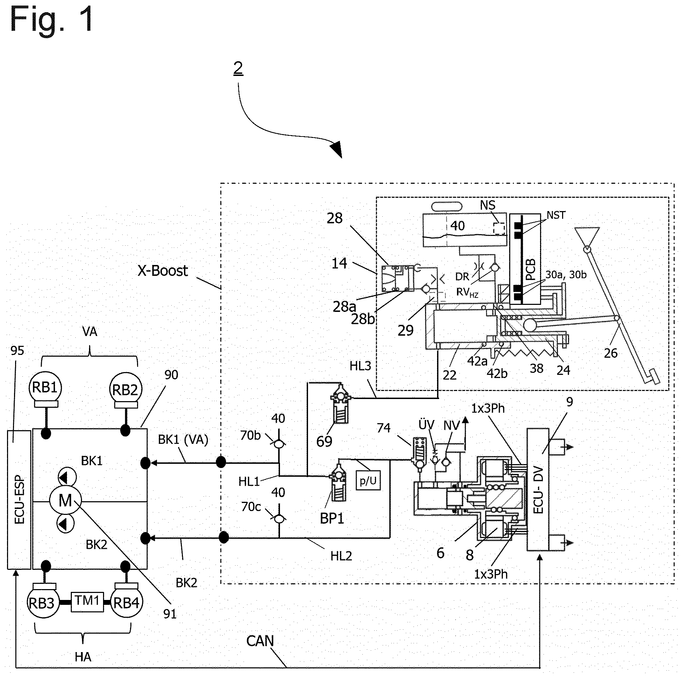

Die Fig. 1 zeigt ein Prinzipschaltbild eines Bremssystems 2, das ein erstes Modul (als X-Boost bezeichnet) und ein zweites Modul umfasst. Das erste Modul - der X-Boost - hat eine erste Druckversorgungseinheit 6 mit einem elektromotorischen Antrieb 8 sowie eine zweite Druckversorgungseinheit 14 mit Hauptbremszylinder 22 und eine Betätigungelement 26 mit Bremspedal. Weiterhin ist eine Ventileinrichtung mit diversen Magnet- und Rückschlagventilen vorgesehen.

Das zweite Modul umfasst eine elektrisch angetriebene Motor-Pumpen-Einheit 90 (auch als ESP-Einheit bezeichnet) mit einer Pumpe mit einem elektromotorischen Antrieb 91 - auch als dritte Druckversorgungseinheit bezeichnet. Bei der Motor-Pumpen-Einheit 90 kann es sich um eine beliebige ESP-Einheit handeln. Eine geeignete ESP Einheit ist in der DE 10 2014 205 645 A1 im Detail beschrieben. Alternativ kann als zweites Modul eine Standard-ABS-Einheit ohne ESP-Funktion eingesetzt werden.

Die beiden Module (X-Boost und ESP-Einheit) sind dazu eingerichtet, zwei Bremskreise BK1 und BK2 mit Druckmittel zu beaufschlagen, wobei die Module vorzugsweise hydraulisch in Serie geschaltet sind. In einem Ausführungsbeispiel ist der X-Boost an der Spritzwand eines Fahrzeuges befestigt, an welches das zweite Modul (ESP-Einheit) an zwei hydraulischen Schnittstellen bzw. Anschlusspunkten (vgl. dicke schwarze Punkte in der Fig. 1 bezüglich BK1, BK2) über hydraulische Leitungen angeschlossen wird.

Die erste Druckversorgungseinheit 6 ist über eine erste Hydraulikleitung HL1 mit dem ersten Bremsreis BK1 bzw. der entsprechenden Schnittstelle verbunden. Weiterhin ist eine zweite Hydraulikleitung HL2 zur Verbindung der ersten Druckversorgungseinheit mit dem zweiten Bremskreis bzw. der entsprechenden Schnittstelle vorgesehen.

Erfindungsgemäß hat die zweite Druckversorgungseinheit 14 des X-Boost nur einen Hauptbremszylinder 22 mit einem Kolben 24 und einer Kolbenkammer 23. Im Ausführungsbeispiel ist die zweite Druckversorgungseinheit 14 einkreisig ausgeführt und steht über eine dritte Hydraulikleitung HL3 und ein Einspeisventil 69 mit dem Bremskreis BK1 bzw. der entsprechenden hydraulischen Schnittstelle in Verbindung. Eine fluide Verbindung zu der zweiten Hydraulikleitung HL2 führt über ein erstes Trennventil BP1. Die zweite Druckversorgungseinheit 14 ist durch ein Schließen des Einspeisventils 69 von den Bremskreisen BK1, BK2 derart abtrennbar, dass im normalen Brake-by-Wire Betrieb ohne Fehler (z. B. ohne Bremskreisausfall) die Betätigungseinheit 26 nur auf einen Wegsimulator 28 wirkt.

In dem Ausführungsbeispiel nach Fig. 1 sind die Bremskreise BK1 und BK2 über das erste Trennventil BP1 (vorzugsweise stromlos-offen) (auf)trennbar. Erfindungsgemäß kann somit bei einem Ausfall der ersten Druckversorgungseinheit 6 der Hauptbremszylinder 22 der zweiten Druckversorgungseinheit 14 entweder nur mit dem ersten Bremskreis BK1 oder mit dem ersten und dem zweiten Bremskreis BK1, BK2 durch Öffnen des ersten Trennventils BP1 verbunden werden. Für diesen Notbetrieb ist das Einspeisventil 69 als stromlos-offenes Ventil ausgebildet. Soweit noch Strom anliegt, wird es geöffnet, so dass die zweite Druckversorgungseinheit 14 nicht mehr von den Bremskreisen BK1, BK2 hydraulisch entkoppelt ist.

Die erste Druckversorgungseinheit 6 wirkt ebenso wahlweise auf den zweiten Bremskreis BK2 (erstes Trennventil BP1 geschlossen) oder beide Bremskreise BK1, BK2 (erstes Trennventil BP1 geöffnet oder stromlos offen). In Normalbetrieb ist das erste Trennventil BP1 offen, so dass die erste Druckversorgungseinheit 6 beide Bremskreise BK1, BK2 mit Druck versorgt und die zweite Druckversorgungseinheit 14 ist durch das geschlossene Einspeisventil 69 vom ersten Bremskreis BK1 abgekoppelt. Wird festgestellt, dass Volumen aus den Bremskreisen BK1, BK2 verlorengeht, kann mittels des ersten Trennventils BP1 der Bremskreis BK1 von der ersten Druckversorgungseinheit 6 abgekoppelt werden, sodass bei einem Leck im ersten Bremskreis BK1 der zweite Bremskreis BK2 ohne Hydraulikmittelverluste weiterbetrieben werden kann.

Im Ausführungsbeispiel ist das erste Trennventil BP1 als Magnetventil ausgeführt, wobei der Kugelsitz des Trennventils BP1 über einen Anschluss (Ventilsitz-Anschluss) an den Abschnitt der Hydraulikleitung angeschlossen ist, der zu der ersten Druckversorgungseinheit 6 hinführt. Damit kann das erste Trennventil BP1 auch bei Ausfall des ersten Bremskreises BK1 durch Bestromung sicher geschlossen werden und wird nicht bei Betrieb der ersten Druckversorgungseinheit 6 durch höhere Drücke aufgedrückt.

Die zweite Druckversorgungseinheit 14 speist bei einer Betätigung des Betätigungselements 26 den Wegsimulator 28 über ein Schnüffelloch in einer Wandung des Hauptzylinders 22, sodass in Abhängigkeit einer Größe der Betätigung des Betätigungselements 26 ein progressiver haptischer Widerstand in Form einer Rückstellkraft spürbar ist. Unter der Größe der Betätigung wird hierbei verstanden, wie "fest und/oder wie weit" ein Fahrer das als Bremspedal ausgebildete Betätigungselement 26 betätigt und somit den Kolben 24 in den Hauptbremszylinder 22 schiebt. Der progressive haptische Widerstand wird auch als Pedalcharakteristik bezeichnet.

Zum Absperren der Verbindung zum Wegsimulator 28 kann ein Wegsimulator-Ventil 29 vorgesehen sein (in Fig. 1 angedeutet).

Die zweite Druckversorgungseinheit 14 weist zumindest eine Schnüffelbohrung 38 auf, die über Hydraulikleitungen mit einem Vorratsbehälter 40 verbunden ist. Der Vorratsbehälter 40 ist ebenfalls Teil des Bremssystems 2.

In dem Ausführungsbeispiel kann in der Hydraulikleitung zwischen der Schnüffelbohrung und dem Vorratsbehälter 40 ein Rückschlagventil RVHZ sowie eine Drossel DR angeordnet sein. Mittels dieses Rückschlagventils RVHZ sowie der ersten Druckversorgungseinheit 6 ist es ermöglicht, eine Diagnose über einen Erhaltungszustand von innerhalb der ersten Druckversorgungseinheit 6 sowie innerhalb des Wegsimulators 28 angeordneten Dichtelementen durchzuführen. Bei der Prüfung der Dichtung des Hauptbremszylinders 22 kann das Wegsimulator-Ventil 29 - soweit vorhanden - geschlossen werden.

Wie dargestellt weist der Hauptbremszylinder 22 zwei Dichtelemente 42a, 42b auf, die als Ringdichtungen ausgebildet sind. Die Schnüffelbohrung 38 ist zwischen den beiden Dichtelementen 42a, 42b angeordnet. In der Verbindung zwischen der Schnüffelbohrung 38, die zwischen den beiden Dichtelementen 42a, 42b angeordnet ist, und dem Vorratsbehälter 40 ist eine Drossel DR angeordnet.

Die Drossel DR ist im Hinblick auf ihre Durchflussmenge so dimensioniert, dass die Pedalcharakteristik bei Ausfall des Dichtelements 42a nicht wesentlich verändert wird (3 mm Pedalweg in 10 s). Zudem kann über die Drossel DR ein temperaturbedingter Volumenausgleich des Druckmittels erfolgen.

Bei einem ABS-Betrieb der Motor-Pumpen-Einheit 90 können hohe Druckspitzen in den Bremskreisen BK1 und BK2 entstehen, die die erste Druckversorgung 6 erheblich belasten können. Ein Druckbegrenzungsventil ÜV ist in der Ausgestaltungsvariante gemäß Fig. 1 über eine Bohrung mit der Kolbenkammer der ersten Druckversorgungseinheit 6 verbunden, damit die hohen Druckspitzen abgebaut werden und eine Schädigung des Systems vermieden wird.

Ein Saugventil NV steht ebenfalls mit der Kolbenkammer der ersten Druckversorgungseinheit 6 in fluider Verbindung und ermöglicht das Nachfördern von Druckmittel aus dem Vorratsbehälter 40. Somit kann die erste Druckversorgungseinheit 6 eigenständig zusätzliche Druckmittel in die Bremskreise BK1, BK2 einbringen. Ein zusätzlich vorgesehenes Schnüffelloch in dem Zylinder der ersten Druckversorgungseinheit 6 ermöglicht einen Volumenausgleich in der Anfangsposition des Kolbens der ersten Druckversorgungseinheit 6.

Die Motor-Pumpen-Einheit 90 ist in der Fig. 1 nur schematisch dargestellt.

Sie versorgt letztendlich vier Radbremsen RB1, RB2, RB3 und RB4. In der schematischen Darstellung bedienen die Radbremsen RB1, RB2 eine Vorderachse VA des Fahrzeugs und die Radbremsen RB3 und RB4 eine Hinterachse HA des Fahrzeugs. An der Hinterachse HA des Fahrzeugs befindet sich ein Antriebselektromotor, um das Fahrzeug anzutreiben. Bei dem Fahrzeug kann es sich um ein reines Elektrofahrzeug oder um ein Hybridfahrzeug handeln.

Der erste Bremskreis BK1 ist mit den Radbremsen RB1 und RB2 verbunden und der zweite Bremskreis BK2 mit den Radbremsen RB3 und RB4. Für die in Fig. 1 dargestellte Hydraulikanordnung ist eine entsprechende Zuordnung vorteilhaft.

Die Motor-Pumpen-Einheit 90 verfügt weiterhin über ein Steuergerät 95 ("ECU-ESP").

Ebenso verfügt die zweite Druckversorgungseinheit 14 über ein Leiterplatine bzw. PCB,die einen Niveausensor NST aufweist, der die Position eines magnetischen Schwimmer NS innerhalb des Vorratsbehälters 40 erfasst. Die PCB weist des Weiteren Sensoren 30a, 30b zur Erfassung des Pedalwegs sowie einer Wegdifferenz zwischen Kolben 24 und Pedalweg auf.

Für die Bereitstellung von zusätzlichem Druckmittel für die Motor-Pumpen-Einheit ist im ersten Bremskreis BK1 ein Saugventil 70b vorgesehen, welches die Pumpe der Motor-Pumpen-Einheit 90 mit dem Vorratsbehälter 40 verbindet.

Benötigt die Pumpe der Motor-Pumpen-Einheit 90 für den zweiten Bremskreis BK2 Druckmittel, so kann dieses aus dem Vorratsbehälter 40 über das Saugventil 70c bereitgestellt werden.

Somit sind die beiden Bremskreise BK1, BK2 durch die jeweiligen Hydraulikleitungen HL1, HL2 jeweils über ein Saugventil 70b bzw. 70c mit dem Vorratsbehälter 40 zum Ansaugen von Druckmittel verbunden. Um eine optimale Ansaugung des Druckmittels zu erreichen, weist das Saugventil 70c vorzugsweise einen Durchmesser im Bereich von 30 mm bis 50 mm und speziell einen Durchmesser von 40 mm auf.

Optional verfügt das Ausführungsbeispiel über eine Steuerung des Lüftspiels zwischen Bremsbelägen und Scheibenbremse. Die Radbremsen RB1, RB2, RB3, RB4 (vgl. Fig. 1) können als reibungsfreie Radbremsen RB1, RB2, RB3, RB4 ausgebildet sein. Bei einem Brake-by-Wire-System ermöglichen Scheibenbremsen mit Bremsbelägen, die mit einem Lüftspiel ohne Druck in der Bremsanlage in Abstand stehen, eine Verringerung des Reibwiderstands. Dies kann durch den Einsatz von Rollbackdichtungen, Rückstellfedern oder ein aktives Zurückziehen der Bremsbeläge durch die Erzeugung von Unterdruck erreicht werden. Die EP 2225133 B1 beschreibt die Möglichkeit mittels der ersten Druckversorgungseinheit 6 einen entsprechenden Unterdruck zu erzeugen und wird hinsichtlich dieser Offenbarung hiermit explizit einbezogen.

Mittels der ersten Druckversorgungseinheit 6 kann das im Betrieb sich veränderliche Lüftspiel in der Radbremse RB1, RB2, RB3, RB4 radindividuell oder bremskreisindividuell durch Auswertung des Druckverlaufes gemessen werden. Erfindungsgemäß kann eine entsprechende Messung im Service, aber auch während des Betriebs des Fahrzeuges erfolgen. Vorzugsweise wird die Messung im Fahrzeugstillstand oder nach einer Bremsung vorgenommen.

Mit den bekannten Lüftspielwerten der Radbremsen RB1, RB2, RB3, RB4 wird dann bei Aktivierung der Radbremse RB1, RB2, RB3, RB4 das Lüftspiel zuerst mittels einer Kolbenwegsteuerung der ersten Druckversorgungseinheit 6 schnell überwunden. Diesbezüglich ist der Einsatz eines bürstenlosen Motors als elektromotorischer Antrieb 8 der ersten Druckversorgungseinheit 6 mit kleiner Zeitkonstante zu bevorzugen, da das Überwinden des Lüftspiels realisiert werden kann, ohne dass der Fahrer dies beim Betätigen der Bremse wahrnimmt.

Zudem kann das Bremssystem 2 so gesteuert werden, dass der Fahrzeugelektromotor TM1 in der Phase des Lüftspiels wirkt. Somit wird unmittelbar bei Betätigung der Bremse eine Bremswirkung erzeugt.

In einem Ausführungsbeispiel der Erfindung werden Unterschiede in den Lüftspielen der Radbremsen RB1, RB2, RB3, RB4 ausgeglichen, indem Einlassventile des zweiten Moduls (ESP-Einheit) angesteuert werden und/oder der Elektromotor einer oder mehrerer Fahrzeugachsen zur Erzeugung einer Bremswirkung zum Beginn einer Bremsung genutzt wird. Mit dem Lüftspiel können allgemein Stick-Slip-Effekte von neuen Bremsanlagen bei geringen Geschwindigkeiten reduziert oder vermieden werden.

In einem Ausführungsbeispiel implementiert das erfindungsgemäße Bremssystem 2 bei einem Ausfall der ESP-Einheit eine Stotterbremse. Durch ein Vor- und Rückbewegen des Kolbens der ersten Druckversorgungseinheit 6 zwischen einem oberen und unteren Druckbereich, wird ein Blockieren der Räder vermieden und die Lenkbarkeit aufrechterhalten.

In einem Ausführungsbeispiel wird zusätzlich oder alternativ ein 1-Kanal-ABS-Betrieb implementiert. Hierfür können über eine Schnittstelle zum Steuergerät 95 der ESP-Einheit Messsignale wie z. B. Druck und Radgeschwindigkeiten eingelesen werden.

Die automatisierte Stotterbremse führt zu ausreichenden Bremswegen (ca. 200 % des Bremsweges bei ABS im Vergleich zu einem vollwertigen radindividuellen ABS) und akzeptabler Stabilität durch Aufrechterhalten der Lenkbarkeit. Bei herkömmlichen Bremssystemen (WO 2011/098178), die diese Notfunktion anbieten, kann ein Betätigen des Pedals zum Blockieren der Räder führen, da die Betätigung über das Bremspedal direkt auf den Kolben des Hauptbremszylinders einwirkt, der bei der Stotterbremsfunktion vor- und zurückbewegt wird.

Das erfindungsgemäße Bremssystem kann diese Notfunktion ohne die Nachteile der herkömmlichen Systeme bereitstellen, da das Bremspedal gemäß einem Aspekt der Erfindung nur auf den Kolben 24 wirkt und von den Bremskreisen BK1, BK2 über das Einspeiseventil 69 getrennt ist. Somit kann beim erfindungsgemäßen Bremssystem die Funktion der automatisierten Stotterbremse durch den Fahrer nicht gestört werden.

Alternativ oder zustätzlich zur Stotterbremse kann ein einkanaliger ABS-Betrieb mit Select-Low-Regelung umgesetzt werden. Dies führt zu einer weiteren Verschlechterung des Bremsweges (ca. 400% Bremsweg im Vergleich zum Bremsweg mit einem vollwertigen radindividuellen ABS), jedoch zu einer uneingeschränkten Fahrzeugstabilität. Erfindungsgemäß können Messwerte, z.B. Druck und Radgeschwindigkeit, für den 1-Kanal-ABS-Betrieb über eine Schittstelle, z.B. CAN-Schnittstelle, von der ESP-Einheit 95 eingelesen werden.

Um die Verfügbarkeit des erfindungsgemäßen Bremssystems 2 gemäß Fig. 1 weiter zu erhöhen, ist der elektromotorische Antrieb 8 der ersten Druckversorgungseinheit 6 über zwei redundante Dreiphasenstränge an die Steuereinheit 9 (ECU DV) des X-Boosts angeschlossen und die Elektronik ist (teil)redundant ausgeführt. Beispielsweise können zwei B6-Brücken für jeden Strang vorgesehen sein. Zudem ist die Elektronik in zumindest einem Ausführungsbeispiel an zwei redundante Spannungsversorgungen angeschlossen. Damit kann die Ausfallwahrscheinlichkeit des elektromotorischen Antriebs 8 um den Faktor 4-10 reduziert werden und der Fehlerfall (Ausfall der ersten Druckversorgungseinheit 6) weiter deutlich reduziert werden.

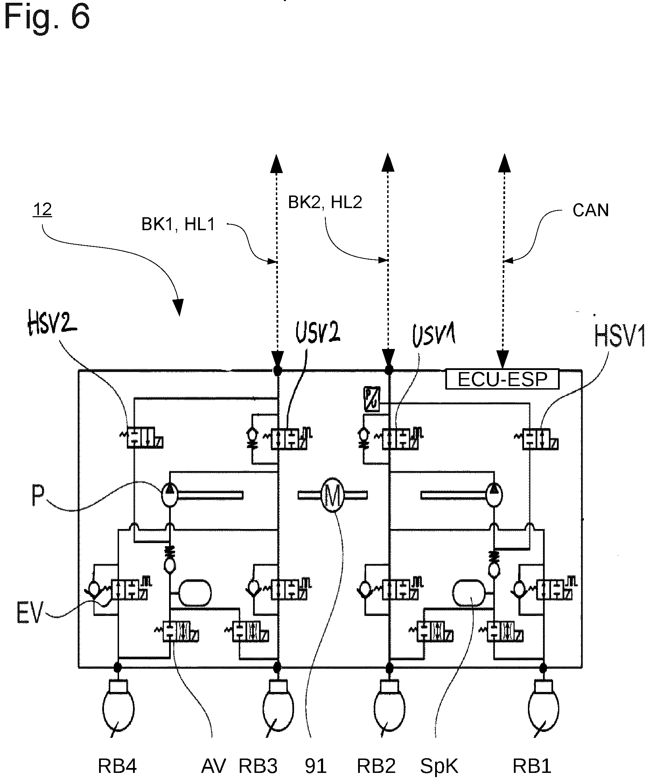

Das Steuergerät der ESP-Einheit 95 sowie die Steuereinheit 9 (ECU DV) des X-Boosters sind kommunikativ über einen CAN-Bus CAN miteinander verbunden. Insofern ist es möglich, Steuerbefehle an die Motor-Pumpen-Einheit 90 abzusetzen, die eine Betätigung des Antriebs 91 und/oder der vorgesehenen Ventile (vgl. auch Fig. 6) verursachen.

Mit dem Bremssystem 2 nach Fig. 1 können folgende sicherheitsrelevante Redundanzen realisiert werden:
- Sicherstellung einer ausreichenden Bremswirkung zur Erfüllung der gesetzlichen Anforderungen bei Bremskreisausfall, Ausfall a) der zweiten Druckversorgungseinheit 14, b) der ersten Druckversorgungseinheit 6 oder c) ersten Druckversorgungseinheit 6 und der dritten Druckversorgungseinheit (gleichzeitig), d. h. auch Erfüllung gesetzlicher Anforderungen bei Doppelfehlern:
   ∘ Fehlerfall 1 - Ausfall der dritten Druckversorgungseinheit (Motor-Pumpen-Einheit 90): Verzögerung durch Bremskraftverstärkung über die erste Druckversorgungseinheit 6 in beiden Bremskreisen BK1, BK2;
   ∘ Fehlerfall 2 - Ausfall der dritten Druckversorgungseinheit und des Bremskreises BK1: Verzögerung durch Bremskraftverstärkung über erste Druckversorgungseinheit 6, z. B. an Hinterachse;
   ∘ Fehlerfall 3 - Ausfall der dritten Druckversorgungseinheit und des zweiten Bremskreises BK2: Verzögerung durch die zweite Druckversorgungseinheit 14, z. B. an der Vorderachse (erstes Trennventil BP1 geschlossen)
   ∘ Fehlerfall 4 - Ausfall der ersten Druckversorgungseinheit 6: Verzögerung durch Bremskraftverstärkung über die dritte Druckversorg ungsei n heit;
   ∘ Fehlerfall 5 - Ausfall der ersten Druckversorgungseinheit 6 und des ersten Bremskreises BK1 oder des zweiten Bremskreises BK2: Verzögerung durch Bremskraftverstärkung über die dritte Druckversorgungseinheit in einem der Bremskreise BK1, BK2, ggf. unterstützt durch Fahrzeugelektromotor TM1 an einer Achse;
   ∘ Fehlerfall 6 - Ausfall der ersten Druckversorgungseinheit 6 und der dritten Druckversorgungseinheit: Bremsen durch Hauptbremszylinder an Vorderachse VA und optional durch Antriebselektromotor an Hinterachse HA;
   ∘ Fehlerfall 7 - Ausfall des Bordnetzes: Bremsen durch zweite Druckversorgungseinheit 14 ggf. an Vorderachse VA und Hinterachse HA.
- Elektronische Bremskraftverteilung (EBV) bei Ausfall der ESP-Einheit durch Druckerzeugung im ersten Bremskreis BK1 über dritte Druckversorgungseinheit und Druckerzeugung im zweiten Bremskreis BK2 über die erste Druckversorgungseinheit 6 bei geschlossenem ersten Trennventil BP1 und Steuerung der ersten Druckversorgungseinheit 6 über Sensorik der zweiten Druckversorgungseinheit 14. Hierzu ist eine S/W-Bremskreisaufteilung erforderlich, d. h. am ersten Bremskreis BK1 sind die Räder der Vorderachse VA, am zweiten Bremskreis BK2 die Räder der Hinterachse HA angeschlossen;
- Steuerung des Lüftspiels zwischen Bremsbelägen und Scheibenbremse;
- 1-Kanal-ABS-Betrieb oder Realisierung einer automatisierten Stotterbremse.

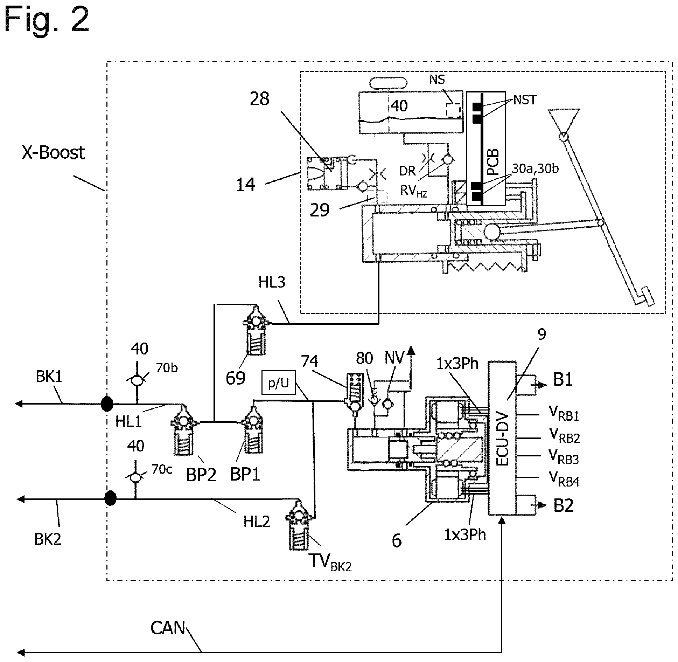

Fig. 2 zeigt eine alternative Ausgestaltung des X-Boosters gemäß Fig. 1. Im Unterschied zu dem Ausführungsbeispiel gemäß Fig. 1 ist in Fig. 2 in der zweiten Hydraulikleitung HL2 ein zweites Trennventil TVBK2 vorgesehen. Dieses zweite Trennventil TVBK2 ermöglicht es, den zweiten Bremskreis BK2 von der ersten Druckversorgung 6 hydraulisch zu entkoppeln. Somit kann die erste Druckversorgung 6 selektiv Druckmittel im ersten Bremskreis BK1 oder im zweiten Bremskreis BK2 oder in beiden Bremskreisen bereitstellen. Bei der Detektion von Volumenverlust im zweiten Bremskreis BK2 kann dieser abgekoppelt werden.

Weiterhin unterscheidet sich das Ausführungsbeispiel gemäß Fig. 2 darin, dass in der ersten Hydraulikleitung zwischen dem ersten Trennventil BP1 und dem Anschlusspunkt für den ersten Bremskreis BK1 ein drittes Trennventil BP2 vorgesehen ist. Vorzugsweise ist dieses dritte Trennventil BP2 so angeordnet, dass die dritte Hydraulikleitung in einer hydraulischen Verbindung zwischen dem ersten Trennventil BP1 und dem dritten Trennventil BP2 in die erste Hydraulikleitung HL1 einmündet. Das dritte Trennventil BP2 ermöglicht es, den ersten Bremskreis BK1 hydraulisch sowohl von der ersten Druckversorgungseinheit 6 sowie von der zweiten Druckversorgungseinheit 14 abzukoppeln. Somit ist es möglich, bei ausgefallener erster Druckversorgungseinheit 6 Druckmittel ausgehend von der zweiten Druckversorgungseinheit 14 über das Einspeisventil 69, das erste Trennventil BP1 und das zweite Trennventil TVBK2 in den zweiten Bremskreis einzubringen. Wenn das dritte Trennventil BP2 verschlossen ist, wird kein Druckmittel in den ersten Bremskreis abgegeben.

Mit dem Bremssystem 2 nach Fig. 2 können folgende sicherheitsrelevante Redundanzen realisiert werden:
- Sicherstellung einer ausreichenden Bremswirkung bei Ausfall der einen oder der mehreren Druckversorgungseinheiten,
   ∘ Fehlerfälle 1-7: siehe Ausführungsform 1;
   ∘ Fehlerfall 8 - Ausfall des Einspeisventils 69 (z.B. undicht) oder Ausfall der elektrischen Ansteuerung: Verschluss der dritten Hydraulikleitung HL3 durch die Trennventile BP1 und BP2, so dass der Wegsimulator voll wirksam ist; erste Druckversorgungseinheit 6 und ESP-Einheit stellen Drücke in den Radbremsen ein;
   ∘ Weiterer Freiheitsgrad: wahlweises Einspeisen des Druckes des Hauptbremszylinders in Bremskreis BK1 oder BK2 bei Ausfall eines Bremskreises.
- Elektronische Bremskraftverteilung (EBV) bei Ausfall ESP-Einheit durch Druckerzeugung in Bremskreis BK1 über die zweite Druckversorgungseinheit 14 und Druckerzeugung im Bremskreis BK2 über die erste Druckversorgungseinheit 6 bei geschlossenem ersten Trennventil BP1 und Steuerung der Druckversorgung über die Sensorik der zweiten Druckversorgungseinheit 14. Hierzu ist S/W-Bremskreisverteilung notwendig und die Bremskraftverteilung in die Bremskreise wird über die Trennventile BP1, BP2 und TVBK2 gesteuert. Erfindungsgemäß kann der Kolben der ersten Druckversorgungseinheit 6 in Vor- und Rückhubbewegung zur Anlegung eines geeigneten Druckes gesteuert werden. Optional kann eine Druckeinstellung über eine PWM-Steuerung der Ventile, insbesondere der Trennventile erfolgen;
- 2-Kanal-ABS-Betrieb, bei dem je nach Straßenbedingungen zwischen einer "select low" (Radblockierdruck des Rads mit den schlechteren Haftbedingungen pro Bremskreis bestimmt den einzustellenden Druck) und einer "select high" (Radblockierdruck des Rads mit den besseren Haftbedingungen pro Bremskreis bestimmt den einzustellenden Druck) Regelung gewechselt wird.
- Lüftspielsteuerung ist in Ausführungsbeispiel nach Fig. 1 bereits ausgeführt. Das Ausführungsbeispiel nach Fig. 2 bietet das zusätzliche Potential, das ungleiche Lüftspiel in den Radbremsen RB1, RB2, RB3, RB4 der Bremskreise BK1, BK2 durch entsprechende Vorsteuerung vor dem Bremskraftverstärkerbetrieb durch sequentielle Öffnung der Trennventile BP1, TVBK2 auszugleichen. Alternativ kann auch der PWM-Betrieb eingesetzt werden, sodass sich unterschiedliche Durchflussquerschnitte zu den Bremskreisen BK1, BK2 einstellen und damit simultan das ungleiche Lüftspiel ausgeglichen werden kann. Hier eignet sich eine S/W-Bremskreisaufteilung. Dieses Verfahren ist einfach möglich, weil die Bremskreistrennventile Bestandteil des X-Boost-Moduls sind und ohne Zeitverzug und Fehleranfälligkeit (z. B. Nutzung einer Schnittstelle zwischen X-Boost und ESP-Einheit) umgesetzt werden können. So kann z. B. die Bremsanlage derart gestaltet werden, dass an der Vorderachse an den Bremsbelägen kein Lüftspiel vorgesehen ist und an der Hinterachse ein Lüftspiel vorgesehen ist. So führt auch ein Ausfall der ersten Druckversorgungseinheit 6 nicht zu einem Zeitverzug der Bremsung, wenn Druck durch die Betätigungseinheit erzeugt wird und erfindungsgemäß auf die Radbremsen RB1, RB2, RB3, RB4 der Vorderachse VA wirkt. Zudem kann mit der Vorderachse VA eine größere Bremswirkung erzeugt werden.

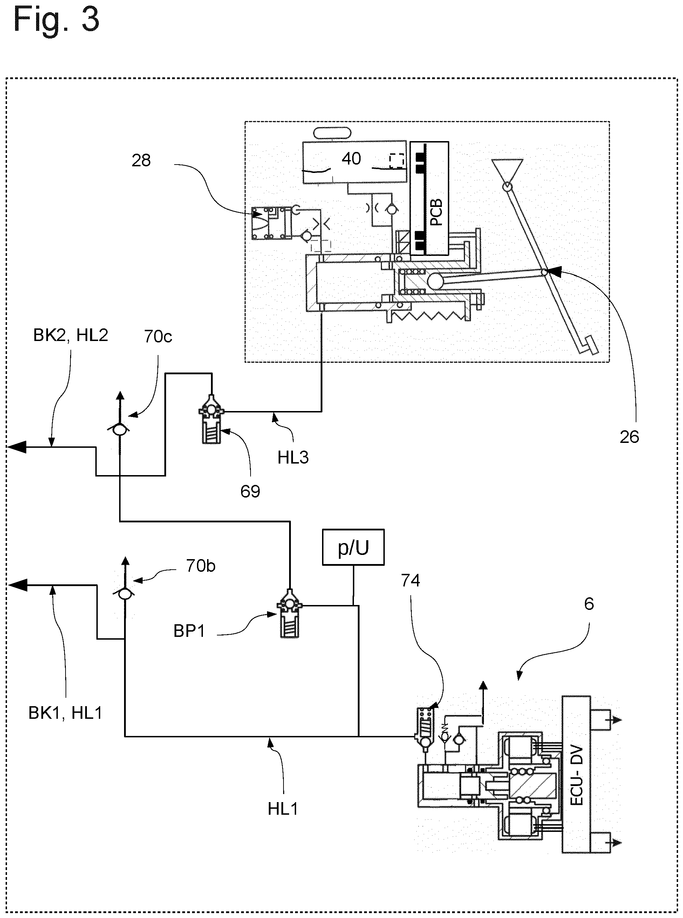

Fig. 3 zeigt eine Variation des Ausführungsbeispiels gemäß Fig. 1. Hier sind die Bremskreise vertauscht. Es sollte für den hier tätigen Fachmann offensichtlich sein, dass sich mit einer entsprechenden Abwandlung der Erfindung ähnliche Vorteile wie diese bereits in Verbindung mit den Ausführungsbeispielen zu Fig. 1 und 2 erläutert wurden, erreichen lassen.

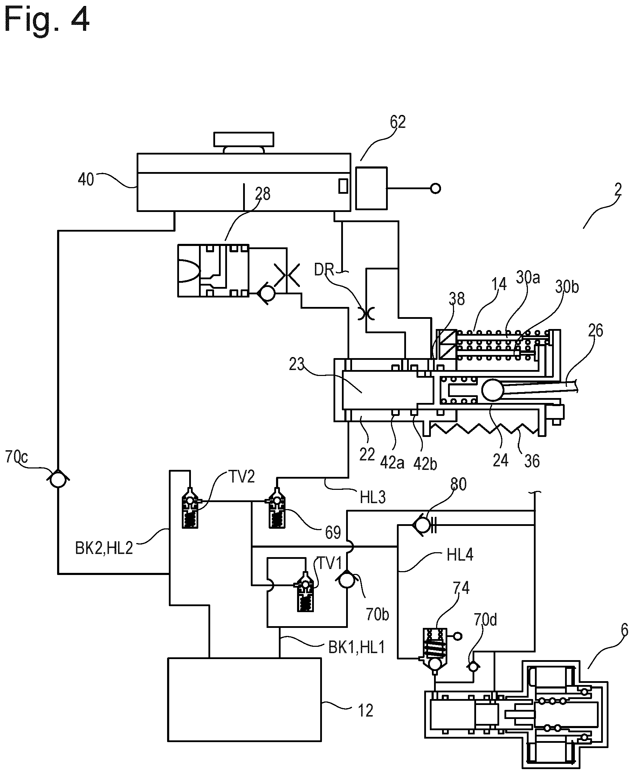

Fig.4 zeigt ein Prinzipschaltbild eines weiteren Ausführungsbeispiels des erfinderischen Bremssystems 2 mit der ersten Druckversorgungseinheit 6, die einen elektromotorischen Antrieb 8 und ein Getriebe aufweist, und mit einer, in Fig. 4 lediglich schematisiert durch ein Rechteck dargestellten, Motor-Pumpen-Einheit 90.

Das Bremssystem 2 weist weiterhin eine zweite Druckversorgungseinheit 14 auf.

Die zweite Druckversorgungseinheit 14 weist, wie auch das Ausführungsbeispiel nach Fig. 1, einen Hauptbremszylinder 22 sowie einen Kolben 24 auf. An dem Kolben 24 ist ein Betätigungselement 26 angeordnet, welches in Fig. 4 nur teilweise dargestellt ist und beispielsweise als ein Bremspedal ausgebildet ist.

Zudem weist das Bremssystem 2 nach Fig. 4 einen Wegsimulator 28 auf, der hydraulisch mit der zweiten Druckversorgungseinheit 14 verbunden ist.

Sensoren 30a, 30b erfassen einen Bremspedalweg und eine Wegdifferenz zwischen Betätigungselement 26 und Kolben 24. Das Betätigungselement 26 wirkt über ein Federelement auf den Kolben 24. Die Sensoren 30a, 30b sind vorzugsweise in der zweiten Druckversorgungseinheit 14 integriert und sind dort Teil eines hier nicht näher beschriebenen Pedalinterfaces.

Das von den Sensoren 30a, 30b erzeugte Signal enthält eine Information über einen Differenzweg und somit ein Ansteuersignal für die erste Druckversorgungseinheit 6, sodass diese in Abhängigkeit des von den Sensoren 30a, 30b erzeugten Signals den ersten Bremskreis BK1 und den zweiten Bremskreis BK2 mit einem Druckmittel beaufschlagt. Alternativ oder zusätzlich erfolgt eine Beaufschlagung der beiden Bremskreise BK1, BK2 mit dem Druckmittel, welches sich innerhalb des Hauptbremszylinders 22 befindet. Somit ist die zweite Druckversorgungseinheit 14 im Ausführungsbeispiel derart eingerichtet, die beiden Bremskreise BK1, BK2 zumindest mittelbar mit dem Druckmittel zu beaufschlagen.

Weiterhin speist die zweite Druckversorgungseinheit 14 bei einer Betätigung des Betätigungselements 26 den Wegsimulator 28 über ein Schnüffelloch in einer Wandung des Hauptbremszylinders 22, sodass in Abhängigkeit einer Größe der Betätigung des Betätigungselements 26 ein progressiver haptischer Widerstand in Form einer Rückstellkraft spürbar ist. Unter der Größe der Betätigung wird hierbei verstanden, wie "fest und/oder wie weit" ein Fahrer das als Bremspedal ausgebildete Betätigungselement 26 betätigt und somit den Kolben 24 in den Hauptbremszylinder 22 schiebt. Der progressive haptische Widerstand wird auch als Pedalcharakteristik bezeichnet.

Weiterhin weist die zweite Druckversorgungseinheit 14 eine Feder 36 auf, welche mit einem Ende an dem Kolben 24 und mit dem anderen Ende an dem Hauptbremszylinder 22 angeordnet ist. Die Feder 36 kann auch Bestandteil der Federcharakteristik des Wegsimulators 28 und somit Bestandteil der Pedalcharakteristik sein.

Die zweite Druckversorgungseinheit 14 weist zumindest eine, im Ausführungsbeispiel zwei, Schnüffelbohrungen 38 auf, die über Hydraulikleitungen mit einem Vorratsbehälter 40 verbunden sind. Der Vorratsbehälter 40 ist in dem Ausführungsbeispiel nach Fig. 4 ebenfalls Teil des Bremssystems 2.

In einer Ausführungsform kann in der Hydraulikleitung zwischen der Schnüffelbohrung 38 und dem Vorratsbehälter 40 ein Rückschlagventil RV (nicht dargestellt) angeordnet sein. Weiterhin kann ein derartiges Rückschlagventil RV (nicht dargestellt) auch in einer Hydraulikleitung zwischen der ersten Druckversorgungseinheit 6 und dem Vorratsbehälter 40 angeordnet sein. Mittels dieses Rückschlagventils RV sowie der ersten Druckversorgungseinheit 6 ist es ermöglicht, eine Diagnose über einen Erhaltungszustand von innerhalb der ersten Druckversorgungseinheit 6 sowie innerhalb des Wegsimulators 28 angeordneter Dichtelemente durchzuführen.

Weiterhin weist der Hauptbremszylinder 22 zwei redundant zueinander ausgebildete Dichtelemente 42a, 42b auf, die als Ringdichtungen ausgebildet sind. Eine der beiden Schnüffelbohrungen 38 ist zwischen den beiden Dichtelementen 42a, 42b angeordnet. In der Verbindung zwischen der Schnüffelbohrung 38, die zwischen den beiden Dichtelementen 42a, 42b angeordnet ist, und dem Vorratsbehälter 40 ist eine Drossel DR angeordnet.

Die Drossel DR ist im Hinblick auf ihre Durchflussmenge so dimensioniert, dass die Pedalcharakteristik bei Ausfall eines der beiden Dichtelemente 42a, 42b nicht wesentlich verändert wird (3 mm Pedalweg in 10 s). Zudem kann über die Drossel DR ein temperaturbedingter Volumenausgleich des Druckmittels erfolgen.

Das Bremssystem 2 ist im Ausführungsbeispiel gemäß Fig. 4, wie auch gemäß Fig. 1 und 2, im Hinblick auf einen Ausfall der ersten Druckversorgungseinheit 6 redundant ausgeführt. Hierzu übernimmt beim Ausfall der ersten Druckversorgungseinheit 6 für einen Bremsvorgang die ABS/ESP-Einheit 90 derart, dass sie mittels der Pumpe P Druckmittel aus dem Vorratsbehälter 40 ansaugt und die Bremskreise BK1 und BK2 damit beaufschlagt. Mit anderen Worten übernimmt die Pumpe P der ABS/ESP-Einheit 90 zumindest hilfsweise die Funktion des Bremskraftverstärkers bei Ausfall der ersten Druckversorgungseinheit 6. Hierzu sind die Hydraulikleitungen HL1 und HL2 jeweils über eine Hydraulikleitung mit dem Vorratsbehälter 40 hydraulisch verbunden.

Die erste Druckversorgungseinheit 6 weist einen Kolben 44 auf, der ein Schnüffelloch 46 aufweist. Ein Ansaugen des Druckmittels erfolgt über eine Hydraulikleitung, mittels der die erste Druckversorgungseinheit 6 mit dem Vorratsbehälter 40 verbunden ist (in Fig. 4 nur zum Teil dargestellt).

Die Dimensionierung der ersten Druckversorgungseinheit 6 kann so gestaffelt werden, dass ein Vollhub des Kolbens 44 einer Volumenaufnahme eines der beiden Bremskreise BK1, BK2 entspricht.

Die erste Druckversorgungseinheit 6 kann wiederum alternativ im Volumen (Kolben und Hub) dementsprechend oder kleiner gestaltet werden.

Ein Druckaufbau und/oder Druckabbau im ersten Bremskreis BK1 und zweiten Bremskreis BK2 erfolgt über eine Steuereinheit 9, an die das Signal der Pedalwegsensoren 30a, 30b übermittelt wird und dann in Abhängigkeit des übermittelten Signals von der Steuereinheit 9 der elektromotorische Antrieb 8 angesteuert wird. Zum Empfang des Signals der Pedalwegsensoren 30a, 30b weist die Steuereinheit Signaleingänge (nicht dargestellt) auf. Weiterhin weist die Steuereinheit zur elektrischen Versorgung zwei Anschlüsse (ebenfalls nicht dargestellt) zu einem Anschluss an ein Bordnetz des Kraftfahrzeuges auf.

Im Normalfall fördert die erste Druckversorgungseinheit 6 ein Volumen mit einem Druck im Bereich von 80 bar bis 120 bar in die Bremskreise BK1 und BK2. Dieser Druckbereich entspricht im Wesentlichen einer Radblockiergrenze. D. h. bei einem höheren Druck würden die Räder blockieren. Ist dennoch ein höherer Druck erforderlich, wird die Pumpe P der ABS/ESP-Einheit 90 eingeschaltet und ein Druckaufbau auf ca. 200 bar erzeugt. Dieser erhöhte Druckaufbau erfolgt jedoch mit entsprechend geringerer Leistung und somit langsamer als der Druckaufbau mit der ersten Druckversorgungseinheit 6. Dies ist zulässig, da der Druckaufbau bis 200 bar nur für Fading-Fälle relevant ist und nicht so schnell erfolgen muss wie der Druckaufbau bis zur Blockiergrenze (z. B. für die Umsetzung von Notbremsfunktionen). Die Pumpe P der ABS/ESP-Einheit 90 ist somit bevorzugt auf 200 bar ausgelegt, die erste Druckversorgungseinheit 6 bevorzugt auf 80-120 bar.

Fällt die erste Druckversorgungseinheit 6 während eines Bremsvorgangs aus, wird der Kolben 44 unter Druck zurückgedrückt, so dass der Bremsdruck komplett abgebaut werden kann. Wird ein selbsthemmendes Getriebe für den Kolben 44 verwendet (z. B. in Form einer Trapezspindel mit Kunststoffmutter), so ist ein derartiger Druckabbau nicht möglich. Für diesen Fall ist ein stromlos geschlossenes Magnetventil im ersten Bremskreis BK1 mit Verbindung zum Vorratsbehälter vorgesehen (nicht eingezeichnet).

Weiterhin weist das Bremssystem 2 eine Ventileinheit 50 auf, die mittels Hydraulikleitungen zwischen der zweiten Druckversorgungseinheit 14 und der ABS/ESP-Einheit mit der Motor-Pumpen-Einheit 90 angeordnet und insbesondere angeschlossen ist. Weiterhin ist die erste Druckversorgungseinheit 6 an die Ventileinheit 50 angeschlossen. Somit wirkt die Ventileinheit 50 nach Art eines Verteilers und ermöglicht die bereits vorstehend beschriebenen Fließwege des Druckmittels. Die Ventileinheit 50 weist ebenfalls (hier aus Gründen der Vereinfachung nicht dargestellte) Rückschlagventile sowie Druckgeber auf.

Die Hilfskolbenkammer 23 der zweiten Druckversorgungseinheit 14 ist mittels einer Hydraulik-Versorgungsleitung HL3 über das Ventil 69 mit der Motor-Pumpen-Einheit 90 verbunden. Speziell sind dem Ventil 69 nachgeschaltet eine erste Hydraulikleitung HL1 und eine zweite Hydraulikleitung HL2 vorgesehen, die parallel zueinander geschaltet sind und mit der Motor-Pumpen-Einheit 12 verbunden sind. Mit anderen Worten teilt sich die Hydraulik-Versorgungsleitung HL3 nach dem Ventil 69 in die erste Hydraulikleitung HL1 (die einen Teil des ersten Bremskreises BK1 ausbildet) und in die zweite Hydraulikleitung HL2 (die einen Teil des zweiten Bremskreises BK2 ausbildet) auf. Weiterhin sind in der ersten Hydraulikleitung HL1 und in der zweiten Hydraulikleitung HL2 jeweils ein Ventil TV1, TV2 angeordnet, mittels dessen die erste Hydraulikleitung HL1 beziehungsweise die zweite Hydraulikleitung HL2 zumindest teilweise reversibel absperrbar sind.

Zur Erhöhung der Saugleistung der Pumpe P im Bremskreis BK1 in der Motor-Pumpen-Einheit 90 ist ein Saugventil 70b vorgesehen, welches die Pumpe P im Bremskreis BK1 der Motor-Pumpen-Einheit 90 mit dem Vorratsbehälter 40 verbindet. Die Motor-Pumpen-Einheit 90 kann dann zusätzlich über die erste Hydraulikleitung HL1, das Ventil 69, die Hydraulik-Versorgungsleitung HL3, Hilfskolbenkammer 23 und Schnüffelbohrung 38 auch über die erste Hydraulikleitung HL1 und das Saugventil 70b Druckmittel aus dem Vorratsbehälter 40 ansaugen. Die Saugleistung der Pumpe P im Bremskreis BK1 in der Motor-Pumpen-Einheit 90 wird dann ebenfalls auch nicht durch einen hydraulischen Strömungswiderstand des Ventils TV1 bzw. von der Ventilkombination TV1/TV11 reduziert.

Die Saugleistung der Pumpe P im Bremskreis BK2 in der Motor-Pumpen-Einheit 90 beim Saugen von Druckmittel aus dem Vorratsbehälter 40 über das Ventil TV2 , die Hydraulikleitung HL2, das Ventil 69 und die Hilfskolbenkammer 23, wird vor allem von dem hydraulischen Strömungswiderstand des Ventils TV2 bestimmt. Zur Erhöhung der Saugleistung der Pumpe P im Bremskreis BK2 in der Motor-Pumpen-Einheit 90 ist ein Saugventil 70c vorgesehen, welches die zweite Hydraulikleitung HL2 mit dem Vorratsbehälter 40 verbindet. Die Pumpe P im Bremskreis BK1 der Motor-Pumpen-Einheit 90 kann dann zusätzlich auch über die zweite Hydraulikleitung HL2 und das Saugventil 70c Druckmittel aus dem Vorratsbehälter 40 ansaugen.

Weiterhin zweigt eine vierte Hydraulikleitung HL4 von der ersten Hydraulikleitung HL1 ab. Die vierte Hydraulikleitung HL4 verbindet den ersten Bremskreis BK1 und die erste Druckversorgungseinheit 6 hydraulisch miteinander. Innerhalb der vierten Hydraulikleitung HL4 ist ein viertes Trennventil 74 angeordnet, mittels dessen die hydraulische Verbindung zwischen dem ersten Bremskreis BK1 und der ersten Druckversorgungseinheit 6 zumindest teilweise reversibel trennbar ist. Bei Leckage des Druckbegrenzungsventils 80 kann das vierte Trennventil 74 geschlossen werden, damit der Bremskreis BK1 nicht ausfällt.

Wesentlich für das Bremssystem 2 gemäß Fig. 4 ist, dass auf eine weitere Druckversorgungseinheit verzichtet wurde. Das Bremssystem 2 weist somit lediglich die erste Druckversorgungseinheit 6 sowie die zweite Druckversorgungseinheit 14 auf, die die beiden Bremskreise BK1, BK2 mit Druckmittel beaufschlagen.

Die zweite Druckversorgungseinheit 14 kann in der Rückfallebene bei einem Ausfall der ersten Druckversorgungseinheit 6 über die Ventile TV1 und TV2 auf einen oder beide Bremskreise BK1, BK2 geschaltet werden, sodass also entweder einer oder beide Bremskreise BK1, BK2 durch die zweite Druckversorgungseinheit 14 mit Druckmittel beaufschlagt wird/werden. Bei einem Ausfall der Steuereinheit 9 wirken beide Bremskreise BK1, BK2.

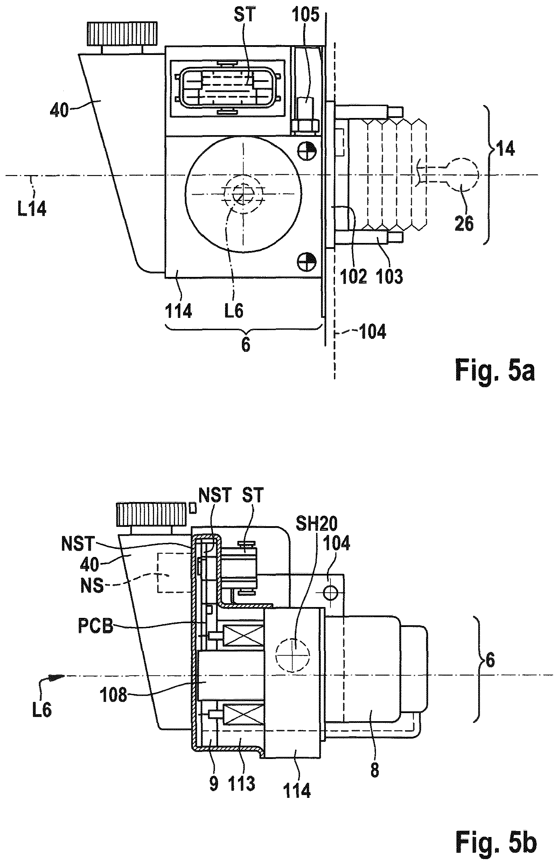

Fig. 5a und Fig. 5b veranschaulichen eine Möglichkeit, wie die einzelnen Komponenten des X-Boosters, insbesondere die ersten und zweite Druckversorgungseinheit 6, 14 und die zugehörigen Ventile, insbesondere die Trennventile 74, PD1, BP1, TV1, BP2, TVBK2, TV2, in einem Gehäuse angeordnet werden können.

Fig. 5a und Fig. 5b zeigt in vereinfachter Darstellung die Grundelemente des Packagings mit elektromotorischem Antrieb 8, zweiter Druckversorgungseinheit 14, insbesondere dem HCU Block 114 mit dem Hauptbremszylinder 22, der ersten Druckversorgungseinheit (ECU), Vorratsbehälter 40 sowie weiteren Komponenten (SH2, Motorsensor und Motorsensorgehäuse).

Die erste Druckversorgungseinheit 6 verfügt über den elektromotorischen Antrieb 8, z.B. einen Spindelantrieb, wie in Fig. 1 gezeigt, sowie ein Kolbengehäuse 108. Das Kolbengehäuse 108 ist an dem HCU-Block 114 über eine Schraubverbindung 101 befestigt

Der Spindelantrieb mit Kolben 24 ist innerhalb des HCU-Blocks 114 angeordnet. Erfindungsgemäß kann der Kolbenhub der ersten Druckversorgungseinheit 6 sehr gering sein, da die Dimensionierung des elektromotorischen Antriebs 8 sowohl für ein niedriges Druckniveau, z. B. 120 bar, als auch ein entsprechend kleineres Volumen ausgelegt ist. Ein höheres Druckniveau und auch zusätzliches Volumen können die ESP-Einheit bereitstellen. Die für die beschriebene Funktion notwendigen Ventile sind ebenfalls in den HCU-Block 114 integriert.

Weiterhin integriert in den HCU-Block 114 ist der SH2, der mit dem Betätigungselement 26 verbunden ist. Der HCU-Block 114 ist mit einem Befestigungsflansch 102 verbunden, welcher mit Befestigungsbolzen 103 mit der Stirnwand 104 des Bremskraftverstärkers verschraubt ist.

Die Steuereinheit 9 (ECU) mit Gehäuse 113 ist auf den HCU-Block 114 befestigt.

Der Stecker ST der Steuereinheit 9 (ECU) ist mit der PCB verbunden. Die PCB trägt auch den Niveausensor NS. Das Niveausensor NS ist linear messend ausgebildet, damit auch kleine Leckflüsse erkannt werden. Er erfasst den magnetischen Schwimmer NS bzw. dessen Position im Vorratsbehälter 40. Für höchste Sicherheitsanforderungen kann der Niveausensor NS auch redundant ausgebildet werden. Voraussetzung für das beschriebene Ausführungsbeispiel (ohne Stecker), ist eine entsprechende Anordnung des Vorratsbehälters 40 hinter der PCB (bezüglich Bildebene der Fig. 5b). Diese Anordnung ermöglicht eine extrem kurze Baulänge, was bei einem Frontalzusammenstoß vorteilhaft ist.

Die hydraulischen Verbindungsleitungen 105 zur ESP-Einheit für die Bremskreise BK1, BK2 2 können auf der Motorseite realisiert werden oder alternativ auf der Stirnseite , vorzugsweise unter ca. 45°. Dies erleichtert die Montage.

Der Stecker ST ist oberhalb des HCU-Blocks 114 angeordnet. In dem dargestellten Ausführungsbeispiel ist ein Wegsimulatorgehäuse 117 separat ausgestaltet und nicht in den HCU-Blocks 114 integriert. Stattdessen ist eine Schraubverbindung vorgesehen, die es ermöglicht die Position des Wegsimulators 28 anzupassen. Dies spart Volumen beim HCU-Block 114.

Ein Aspekt der Erfindung ist es, dass die erste und zweite Druckversorgungseinheit 6,14 in dem beschriebenen Gehäuse im Wesentlichen senkrecht zueinander angeordnet sind. Durch die Ausrichtung der Kolben der Druckversorgungseinheiten 6, 14 haben diese eine Erstreckungsrichtung, die in den Fig. 5a und 5b als L6 (=Längsachse der ersten Druckversorgungseinheit 6) und L14 (=Längsachse der zweiten Druckversorgungseinheit 14) bezeichnet sind. Diese beiden Achsen L6, L14 stehen in dem gezeigten Ausführungsbeispiel aufeinander senkrecht, wodurch ein sehr kompaktes Anordnen der Kolben erreicht werden kann. Wie anhand der Fig. 5a, 5b ersichtlich liegen die Längsachsen L6 und L14 nicht in derselben Ebene, sondern sind in zwei parallelen - versetzten Ebenen - angeordnet. Bildet man die Längsachsen L6 und L14 auf eine gemeinsame Ebene ab, so ergibt sich der senkrechte Verlauf. Der Versatz kann im Bereich von 1 bis 15 cm liegen.

Fig. 6 zeigt ein Prinzipschaltbild ESP-Einheit mit der Motor-Pumpen-Einheit 90 zur Verwendung in dem erfindungsgemäßen Bremssystem 2. Die ABS/ESP-Einheit ist bekannt mit den Hauptkomponenten Pumpe P mit Motor 91, den Ventilen HSV1 und HSV2, USV1 und USV2, den den Radbremsen RB1, RB2, RB3, RB4 zugeordneten Einlass- und Auslassventilen EV und AV, und der Speicherkammer (SpK). In vielen Publikationen und Patentanmeldungen ist dieses System beschrieben. Es ist bereits als E-Booster auf dem Markt und wird vor allem in E- und Hybrid-Fahrzeugen eingesetzt, weil hier die Steuerung des Bremssystems in Zusammenwirken mit dem Bremsmoment des Generators, d. h. Rekuperation erfolgt.

In einem Ausführungsbeispiel der Erfindung kann die ESP-Einheit ein bidirektionales Ventil HSV1 aufweisen, so dass über dieses Ventil HSV1 in einem Fehlerfall unter Umgehung der Pumpe P Druck aus den Radbremsen RB3, RB4 abgelassen werden kann. Diese Ausgestaltung ist in Verbindung mit der selektiven Druckregelung in den Bremskreisen BK1, BK2 besonders vorteilhaft.

Ein Aspekt der Erfindung kann insbesondere bei dieser Ausgestaltung darin bestehen, dass die Steuereinheit 9 kommunikativ mit der Steuergerät 95 ("ECU-ESP") der ESP-Einheit in Verbindung steht und zur Erzielung der bereits beschriebenen Sicherheitsaspekte zumindest die Einlass- und Auslassventile AV von der Steuereinheit 9 steuerbar sind.

Durch die Einsparung einer Druckversorgungseinheit ist eine weitere Kostenreduzierung im Vergleich zu den beispielsweise im Stand der Technik beschriebenen Ausführungsformen von Bremssystemen 2 erreicht.

### Bezugszeichenliste

- 2: Bremssystem
- 6, DV1: erste Druckversorgungseinheit
- 8: elektromotorischer Antrieb
- 9: Steuereinheit (ECU)
- 10: Getriebe
- 14, BE: zweite Druckversorgungseinheit
- 22: Hauptbremszylinder
- 23: Kolbenkammer
- 24: Kolben
- 26: Betätigungselement
- 28, WS: Wegsimulator
- 28a, 28b: Dichtelement des Wegsimulators
- 29: Wegsimulator-Ventil
- 30a, 30b: Pedalwegsensor
- 32: Wegsimulator-Kolben
- 34: Federelement des Wegsimulators
- 36: Feder
- 38: Schnüffelbohrung der zweiten Druckversorgungseinheit
- 40, VB: Vorratsbehälter
- 42a, 42b: Dichtelement des Hilfskolbens
- 44: Kolben der ersten Druckversorgungseinheit
- 46: Schnüffelloch des Kolbens der ersten Druckversorgungseinheit
- 48: Steuereinheit
- 50: Ventileinheit
- 62: Sensorelement
- 69,FV: Einspeisventil
- 70b, 70c, 80d, RV1, RV2, NV: Saugventil
- 74, PD1: viertes Trennventil
- 80, ÜV: Druckbegrenzungsventil
- 90, DV2: Motor-Pumpen-Einheit
- 91: Antrieb
- 95: Steuergerät der ESP-Einheit
- 101: Schraubverbindung
- 102: Befestigungsflansch
- 103: Befestigungsbolzen
- 104: Strirnwand
- 105: Verbindungsleitungen
- 108: Kolbengehäuse
- 110: Sensorelement
- 113: Steuereinheit-Gehäuse
- 114: HCU-Block
- 117: Wegsimulatorgehäuse

- B1, B2: Elektrische Anschlüsse (dreiphasig)
- P: Pumpe
- M: Motor
- BP1, TV1: erstes Trennventil
- TVBK2, TV2: zweites Trennventil
- BP2: drittes Trennventil
- RB1, RB2, RB3, RB4: Radbremse
- DR: Drossel
- BK1: erster Bremskreis
- BK2: zweiter Bremskreis
- HL1: erste Hydraulikleitung
- HL2: zweite Hydraulikleitung
- HL3: dritte Hydraulikleitung
- HL4: vierte Hydraulikleitung
- L6: Längsachse der ersten Druckversorgungseinheit
- L14: Längsachse der zweiten Druckversorgungseinheit
- VA: Vorderachse
- HA: Hinterachse
- TM1: Fahrzeugelektromotors
- RVHZ: Rückschlagventil
- CAN: CAN-Bus
- ST: Stecker
- NS: Schwimmer
- NST: Niveausensor
- HSV1, HSV2, USV1, USV2: Ventile der ESP-Einheit
- AV: Auslaßventil
- EV: Einlaßventil
- SpK: Speicherkammer

## Patentansprüche

1. Bremssystem (2) mit
• einer ersten Druckversorgungseinheit (6), mit einem elektromotorischen Antrieb (8), die derart eingerichtet ist, zumindest einen ersten Bremskreis (BK1) und zumindest einen zweiten Bremskreis (BK2) mit einem Druckmittel zu beaufschlagen,
• einer Motor-Pumpen-Einheit (12, 90), die derart eingerichtet ist, zumindest einen der Bremskreise (BK1, BK2) mit dem Druckmittel zu beaufschlagen,
• einer zweiten Druckversorgungseinheit (14), die derart eingerichtet ist, zumindest einen der Bremskreise (BK1, BK2) mit dem Druckmittel zu beaufschlagen, wobei die zweite Druckversorgungseinheit (14) über mindestens eine erste Hydraulikleitung (HL1) und über mindestens eine zweite Hydraulikleitung (HL2) mit der Motor-Pumpen-Einheit (12, 90) verbunden ist,
• einer Ventileinheit,
wobei zumindest einer der Bremskreise (BK1) mit der zweiten Druckversorgungseinheit (14) über zumindest eine dritte Hydraulikleitung (HL3) verbunden ist,
wobei die Ventileinheit zumindest ein Einspeiseventil (69) umfasst, über das die dritte Hydraulikleitung (HL3) zumindest teilweise reversibel absperrbar ist, wobei in zumindest einer der Hydraulikleitungen (HL1, HL2) ein Trennventil (BP1, BP2, TV1, TV2) angeordnet ist, über das die jeweilige Hydraulikleitung (HL1,HL2) zumindest teilweise reversibel absperrbar ist,
**dadurch gekennzeichnet, dass**
die zweite Druckversorgungseinheit (14) einen Hauptbremszylinder (22) mit genau einem Kolben (24) und genau einer Kolbenkammer (23) aufweist, wobei der Hauptbremszylinder (22) zumindest eine Schnüffelbohrung (38) aufweist, die über eine Hydraulikleitung mit einem Vorratsbehälter (40) verbunden ist; und
wobei der Hauptbremszylinder (22) zwei Ringdichtungen (42a, 42b) aufweist, wobei mindestens eine Schnüffelbohrung (38) zwischen den Ringdichtungen (42a, 42b) angeordnet ist, und in der Hydraulikleitung zwischen der Schnüffelbohrung (38), die zwischen den beiden Ringdichtungen (42a, 42b) angeordnet ist, und dem Vorratsbehälter (40) eine Drossel (DR) sowie vorzugsweise ein parallelgeschaltetes Rückschlagventil (RV_{HZ}) angeordnet ist.

2. Bremssystem (2) nach Anspruch 1,
**dadurch gekennzeichnet, dass**
in der ersten Hydraulikleitung (HL1) mindestens ein erstes Trennventil (TV1, BP1) als Trennventil (BP1, BP2, TV1, TV2) angeordnet ist, wobei die dritte Hydraulikleitung (HL3) und das erste Trennventil (TV1, BP1) derart angeordnet sind, dass Druckmittel aus der zweiten Druckversorgungseinheit (14) über das erste Trennventil (TV1, BP1) in den zweiten Bremskreis (BK2) gelangt und/oder
in der zweiten Hydraulikleitung (HL2) mindestens ein zweites Trennventil (TV2, TVBK2) als Trennventil (BP1, BP2, TV1, TV2) angeordnet ist, wobei das zweite Trennventil (TVBK2) vorzugsweise derart angeordnet ist, dass ein Ventilsitz-Anschluss des zweiten Trennventils (TVBK2) hydraulisch mit dem zweiten Bremskreis (BK2) verbunden ist,
wobei vorzugsweise das erste Trennventil (BP1) oder das zweite Trennventil (TVBK2) ein stromlos offenes Ventil ist.

3. Bremssystem (2) nach einem der vorhergehenden Ansprüche,
**gekennzeichnet durch**
mindestens ein drittes Trennventil (BP2) als Trennventil (BP1, BP2, TV1, TV2), das derart angeordnet und ausgebildet ist, dass in einem geschlossenen Zustand des dritten Trennventils (BP2) der erste Bremskreis (BK1) hydraulisch von der ersten und zweiten Druckversorgungseinheit (6, 14) entkoppelt ist,
wobei das dritte Trennventil (BP2) vorzugsweise derart angeordnet ist, dass ein Ventilsitz-Anschluss des dritten Trennventils (BP2) hydraulisch mit dem ersten Bremskreis (BK1) verbunden ist,
wobei vorzugsweise das dritte Trennventil (BP2) und/oder das Einspeiseventil (69) ein stromlos offenes Ventil ist.

4. Bremssystem (2) nach Anspruch 2,
**dadurch gekennzeichnet, dass**
das erste Trennventil (BP1) derart angeordnet ist, dass ein Ventilsitz-Anschluss des ersten Trennventils (BP1) hydraulisch mit dem zweiten Trennventil (TVBK2) und über ein viertes Trennventil (74) als Trennventil (BP1, BP2, TV1, TV2) mit der ersten Druckversorgungseinheit (6) verbunden ist.

5. Bremssystem (2) nach einem der vorhergehenden Ansprüche, insbesondere nach Anspruch 2,
wobei ein Wegsimulator (28) vorgesehen ist, der mit der zweiten Druckversorgungseinheit (14) verbunden ist, wobei der Wegsimulator (28) vorzugsweise zwei Dichtelemente (28a, 28b) aufweist.

6. Bremssystem (2) nach einem der vorhergehenden Ansprüche,
wobei die dritte Hydraulikleitung (HL3) mit der ersten Hydraulikleitung (HL1) und, insbesondere über das erste Trennventil (TV1, BP1), mit der zweiten Hydraulikleitung (HL2) verbunden ist.

7. Bremssystem (2) nach Anspruch 4,
wobei mittels des vierten Trennventils (74) die erste und zweite Hydraulikleitung reversibel von der ersten Druckversorgung (6) trennbar ist und
das vierte Trennventil (74) derart angeordnet und ausgebildet ist, dass die erste und zweite Hydraulikleitung (HL1, HL2) in einem geschlossenen Zustand des vierten Trennventils (74) von der ersten Druckversorgungseinheit (6) abgetrennt ist,
wobei das vierte Trennventil (74) vorzugsweise ein stromlos geschlossenes Ventil ist.

8. Bremssystem (2) nach einem der vorhergehenden Ansprüche,
**gekennzeichnet durch**:
mindestens ein Druckbegrenzungsventil (80, ÜV), das vorzugsweise in fluider Verbindung mit der ersten Druckversorgungseinheit (6), insbesondere deren Arbeitsraum, steht.

9. Bremssystem (2) nach einem der vorhergehenden Ansprüche,
wobei die erste Hydraulikleitung (HL1) und/oder die zweite Hydraulikleitung (HL2) über jeweils ein Saugventil (70b, 70c) mit dem Vorratsbehälter (40) verbunden sind.

10. Bremssystem (2) nach einem der vorhergehenden Ansprüche,
wobei an der zweiten Druckversorgungseinheit (14) ein Betätigungselement (26), insbesondere ein Bremspedal, angeordnet ist, wobei der Kolben (24) mittels des Betätigungselements (26) betätigbar ist.

11. Bremssystem (2) nach einem der vorhergehenden Ansprüche,
wobei der Vorratsbehälter (40) einen Niveausensor (NST) aufweist, der dazu ausgebildet ist, einen Füllstand des Druckmittels innerhalb des Vorratsbehälters (40) zu erfassen, wobei vorzugsweise eine Schwimmer mit einem Magneten innerhalb des Vorratsbehälters (40) angeordnet ist, dessen Position drahtlos, insbesondere über die Erfassung eines Magnetfelds, erfassbar ist.

12. Bremssystem (2) nach Anspruch 11,
**dadurch gekennzeichnet, dass**
eine Steuereinheit des Bremssystems (2), dazu ausgebildet ist, basierend auf Signalen des Niveausensors eine Diagnose zur Bestimmung der Dichtheit von Dichtungen, insbesondere Dichtungen der ersten und/oder zweiten Druckversorgungseinheiten (6, 14), und/oder zur Bestimmung einer Leckage durchzuführen,
wobei vorzugsweise der elektromotorische Antrieb (8) der ersten Druckversorgungseinheit (6) einen redundanten 3-phasigen elektrischen Anschluss (B1, B2) zur Ansteuerung durch die Steuereinheit (48) aufweist.

13. Bremssystem (2) nach einem der vorhergehenden Ansprüche,
**dadurch gekennzeichnet, dass**
die erste Druckversorgungseinheit (6) mit einer ersten Kolben-Zylinder-Einheit und die zweite Druckversorgungseinheit (14) mit einer zweiten Kolben-Zylinder-Einheit derart in einem Gehäuse angeordnet ist, dass eine Längsachse (L6) der ersten Kolben-Zylinder-Einheit im Wesentlichen senkrecht zu einer Längsachse (L14) der zweiten Kolben-Zylinder-Einheit verläuft.

14. Verfahren zum Steuern eines Bremssystems (2) nach einem der vorhergehenden Ansprüche, umfassend die Schritte:
a. Bereitstellen eines ersten Drucks an einem ersten Anschlusspunkt zur Verbindung mit einem ersten Bremskreis (BK1);
b. Bereitstellen eines zweiten Drucks an einem zweiten Anschlusspunkt zur Verbindung mit einem zweiten Bremskreis (BK2);
c. Detektion eines ersten Fehlerfalls, insbesondere den Verlust von Druckmittel im ersten Bremskreis (BK1);
d. Verschließen mindestens eines ersten Trennventils (BP1) in Reaktion auf die Detektion des ersten Fehlerfalls derart, dass eine erste Druckversorgungseinheit (6) hydraulisch von dem ersten Anschlusspunkt entkoppelt ist.

15. Verfahren nach Anspruch 14,
**gekennzeichnet durch**:
ein Diagnostizieren einer Dichtheit des ersten Trennventils (BP1) **durch**:
- ein Schließen des ersten Trennventils (BP1) und eines zweiten Trennventils (TVBK2) und
- ein Druckaufbauen mittels der ersten Druckversorgungseinheit (6) und
- ein Messen eines Drucks zumindest über ein vorgegebenes Zeitintervall.

16. Verfahren nach Anspruch 14 oder 15,
**gekennzeichnet durch**:
eine Detektion eines zweiten Fehlerfalls, insbesondere eines zu mindestens teilweisen Ausfalls einer ESP-Einheit, vorzugsweise einer dritten Druckversorgungseinheit, wobei in Reaktion auf die Detektion des zweiten Fehlerfalls erfolgt:
- ein Einlesen von Messsignalen der ESP-Einheit über mindestens einen Bus, insbesondere einen CAN-Bus (CAN);
- ein Implementieren einer Steuerstrategie, insbesondere für Ventile der ESP-Einheit, unter Berücksichtigung der Messsignale.

17. Verfahren nach einem der Ansprüche 14 bis 16,
**gekennzeichnet durch**:
- eine Detektion eines dritten Fehlerfalls, insbesondere Ausfalls der ersten Druckversorgungseinheit (6) und/oder der Ausfall des zweiten Bremskreises (BK2), wobei in Reaktion auf die Detektion des dritten Fehlerfalls erfolgt:
- ein Steuern von Ventilen derart, dass der erste Bremskreis (BK1) mit Druckmittel aus der zweiten Druckversorgungseinheit (14) beaufschlagbar ist, um eine erste Achse, insbesondere eine Vorderachse (VA), eines Fahrzeugs zu bremsen; und
- ein gleichzeitiges Ansteuern eines Fahrzeugelektromotors (TM1) an einer zweiten Achse, um die zweite Achse zu bremsen.

## Claims

1. Brake system (2), comprising
• a first pressure supply unit (6), with an electromotive drive (8), which is configured to supply a pressure medium to at least one first brake circuit (BK1) and to at least one second brake circuit (BK2),
• a motor-pump unit (12, 90) which is configured to supply the pressure medium to at least one of the brake circuits (BK1, BK2),
• a second pressure supply unit (14) which is configured to supply the pressure medium to least one of the brake circuits (BK1, BK2), wherein the second pressure supply unit (14) is connected to the motor-pump unit (12, 90) via at least one first hydraulic line (HL1) and via at least one second hydraulic line (HL2),
• a valve unit,
wherein at least one of the brake circuits (BK1) is connected to the second pressure supply unit (14) via at least one third hydraulic line (HL3), wherein the valve unit comprises at least one feed valve (69) via which the third hydraulic line (HL3) can be at least partially reversibly shut off, wherein an isolating valve (BP1, BP2, TV1, TV2) is arranged in at least one of the hydraulic lines (HL1, HL2), via which the respective hydraulic line (HL1, HL2) can be at least partially reversibly shut off,
**characterized in that**
the second pressure supply unit (14) comprises a main brake cylinder (22) with exactly one piston (24) and exactly one piston chamber (23),
wherein the main brake cylinder (22) comprises at least one expansion bore (38) connected to a reservoir (40) via a hydraulic line; and
wherein the main brake cylinder (22) comprises two ring seals (42a, 42b), wherein at least one expansion bore (38) is arranged between the ring seals (42a, 42b), and wherein a throttle (DR) and preferably, a check valve (RV_{HZ}) connected in parallel, is arranged in the hydraulic line between the expansion bore (38) arranged between the ring seals (42a, 42b) and the reservoir (40).

2. Brake system (2) according to claim 1,
**characterized in that**
at least one first isolating valve (TV1, BP1) is arranged in the first hydraulic line (HL1) as isolating valve (BP1, BP2, TV1, TV2), wherein the third hydraulic line (HL3) and the first isolating valve (TV1, BP1) are arranged in such a way that pressure medium from the second pressure supply unit (14) passes into the second brake circuit (BK2) via the first isolating valve (TV1, BP1) and/or at least one second isolating valve (TV2, TVBK2) is arranged in the second hydraulic line (HL2) as isolating valve (BP1, BP2, TV1, TV2),
wherein preferably, the second isolating valve (TVBK2) is arranged in such a way that a valve seat connection of the second isolating valve (TVBK2) is hydraulically connected to the second brake circuit (BK2),
wherein preferably, the first isolating valve (BP1) or the second isolating valve (TVBK2) is a normally open valve.

3. Brake system (2) according to one of the preceding claims, **characterized by**
at least one third isolating valve (BP2) as isolating valve (BP1, BP2, TV1, TV2), which is arranged and configured in such a way that in a closed state of the third isolating valve (BP2), the first brake circuit (BK1) is hydraulically decoupled from the first and second pressure supply unit (6, 14), wherein preferably, the third isolating valve (BP2) is arranged in such a way that a valve seat connection of the third isolating valve (BP2) is hydraulically connected to the first brake circuit (BK1),
wherein preferably, the third isolating valve (BP2) and/or the feed valve (69) is a normally open valve.

4. Brake system (2) according to claim 2,
**characterized in that**
the first isolating valve (BP1) is arranged in such a way that a valve seat connection of the first isolating valve (BP1) is hydraulically connected to the second isolating valve (TVBK2) and, via a fourth isolating valve (74) as isolating valve (BP1, BP2, TV1, TV2), to the first pressure supply unit (6).

5. Brake system (2) according to one of the preceding claims, in particular according to claim 2,
wherein a travel simulator (28) is provided which is connected to the second pressure supply unit (14),
wherein preferably, the travel simulator (28) comprises two sealing elements (28a, 28b)

6. Brake system (2) according to one of the preceding claims,
wherein the third hydraulic line (HL3) is connected to the first hydraulic line (HL1) and, in particular via the first isolating valve (TV1, BP1), to the second hydraulic line (HL2).

7. Brake system (2) according to claim 4,
wherein the first and second hydraulic line can be reversibly separated from the first pressure supply unit (6) by means of the fourth isolating valve (74) and
the fourth isolating valve (74) is arranged and adapted in such a way that the first and second hydraulic line (HL1, HL2) are disconnected from the first pressure supply unit (6) in a closed state of the fourth isolating valve (74), wherein preferably, the fourth isolating valve (74) is a normally closed valve.

8. Brake system (2) according to one of the preceding claims, **characterized by**:
at least one pressure relief valve (80, ÜV), which is preferably in fluid connection to the first pressure supply unit (6), in particular the working chamber thereof.

9. Brake system (2) according to one of the preceding claims,
wherein the first hydraulic line (HL1) and/or the second hydraulic line (HL2) are connected to the reservoir (40) via in each case a suction valve (70b, 70c).

10. Brake system (2) according to one of the preceding claims,
wherein an actuating element (26), in particular a brake pedal, is arranged on the second pressure supply unit (14), wherein the piston (24) is actuatable by means of the actuating element (26).

11. Brake system (2) according to one of the preceding claims,
wherein the reservoir (40) comprises a level sensor (NST), which is configured to detect a fill level of the pressure medium within the reservoir (40), wherein preferably a float with a magnet is arranged within the reservoir (40), the position of which float can be detected wirelessly, in particular via the detection of a magnetic field.

12. Brake system (2) according to claim 11,
**characterized in that**
a control unit of the brake system (2) is configured to perform a diagnosis for determining the tightness of seals, in particular seals of the first and/or second pressure supply units (6, 14), and/or for determining a leak, based on signals of the level sensor,
wherein preferably, the electromotive drive (8) of the first pressure supply unit (6) has a redundant 3-phase electrical connection (B1, B2) for actuation by the control unit (48).

13. Brake system (2) according to one of the preceding claims,
**characterized in that**
the first pressure supply unit (6) with a first piston-cylinder unit and the second pressure supply unit (14) with a second piston-cylinder unit are arranged in a housing in such a way that a longitudinal axis (L6) of the first piston-cylinder unit is substantially perpendicular to a longitudinal axis (L14) of the second piston-cylinder unit.

14. Method for controlling a brake system (2) according to one of the preceding claims, comprising the following steps:
a. providing a first pressure at a first connection point for connection to a first brake circuit (BK1);
b. providing a second pressure at a second connection point for connection to a second brake circuit (BK2);
c. detecting a first fault condition, in particular the loss of pressure medium in the first brake circuit (BK1);
d. closing at least a first isolating valve (BP1) in response to the detection of the first fault condition, such that a first pressure supply unit (6) is hydraulically decoupled from the first connection point.

15. Method according to claim 14,
**characterized by**:
a diagnosis of a tightness of the first isolating valve (BP1) by:
- closing the first isolating valve (BP1) and a second isolating valve (TVBK2) and
- building up pressure by means of the first pressure supply unit (6) and
- measuring a pressure at least over a predetermined time interval.

16. Method according to claim 14 or 15,
**characterized by**:
a detection of a second fault condition, in particular an at least partial failure of an ESP unit, preferably of a third pressure supply unit, wherein, in response to the detection of the second fault condition, the following steps are performed:
- a read in of measurement signals of the ESP unit a via at least one bus, in particular a CAN bus (CAN);
- implementing a control strategy, in particular for valves of the ESP unit, taking into account the measurement signals.

17. Method according to one of claims 14 to 16,
**characterized by**:
- a detection of a third fault condition, in particular failure of the first pressure supply unit (6) and/or failure of the second brake circuit (BK2), wherein the following steps are performed in response to the detection of the third fault condition:
- controlling of valves in such a way that the first brake circuit (BK1) can be supplied with pressure medium from the second pressure supply unit (14) in order to brake a first axle, in particular a front axle (VA), of a vehicle; and
- simultaneously actuating a vehicle electric motor (TM1) on a second axle in order to brake the second axle.

## Revendications

1. Système de freinage (2) comprenant
- une première unité d'alimentation en pression (6), comprenant un entraînement électromoteur (8) qui est configuré de manière à soumettre au moins un premier circuit de freinage (BK1) et au moins un deuxième circuit de freinage (BK2) à un agent de pression,
- une unité pompe-moteur (12, 90) qui est configurée de manière à soumettre au moins un des circuits de freinage (BK1, BK2) à l'agent de pression,
- une deuxième unité d'alimentation en pression (14) qui est configurée de manière à soumettre au moins un des circuits de freinage (BK1, BK2) à l'agent de pression, sachant que la deuxième unité d'alimentation en pression (14) est reliée à l'unité pompe-moteur (12, 90) via au moins une première conduite hydraulique (HL1) et via au moins une deuxième conduite hydraulique (HL2),
- une unité de vannes,
sachant qu'au moins un des circuits de freinage (BK1) est relié à la deuxième unité d'alimentation en pression (14) via au moins une troisième conduite hydraulique (HL3),
sachant que l'unité de vannes comprend au moins une vanne d'admission (69) via laquelle la troisième conduite hydraulique (HL3) peut être isolée au moins en partie de manière réversible,
sachant que dans au moins une des conduites hydrauliques (HL1, HL2), une vanne d'isolement (BP1, BP2, TV1, TV2) est disposée, via laquelle la conduite hydraulique (HL1, HL2) respective peut être isolée au moins en partie de manière réversible,
**caractérisé en ce que**
la deuxième unité d'alimentation en pression (14) présente un vérin de freinage principal (22) avec exactement un piston (24) et exactement une chambre à piston (23),
sachant que le vérin de freinage principal (22) présente au moins un alésage de reniflard (38) qui est relié à un réservoir de stockage (40) via une conduite hydraulique ; et
sachant que le vérin de freinage hydraulique (22) présente deux garnitures d'étanchéité annulaires (42a, 42b),
sachant qu'au moins un alésage de reniflard (38) est disposé entre les garnitures d'étanchéité annulaires (42a, 42b), et un étranglement (DR) ainsi que de préférence une vanne anti-retour (RV_{HZ}) montée en parallèle sont disposés dans la conduite hydraulique entre l'alésage de reniflard (38) qui est disposé entre les deux garnitures d'étanchéité annulaires (42a, 42b), et le réservoir de stockage (40).

2. Système de freinage (2) selon la revendication 1,
**caractérisé en ce que**
dans la première conduite hydraulique (HL1), au moins une première vanne d'isolement (TV1, BP1) est disposée comme vanne d'isolement (BP1, BP2, TV1, TV2), sachant que la troisième conduite hydraulique (HL3) et la première vanne d'isolement (TV1, BP1) sont disposées de telle manière que de l'agent de pression provenant de la deuxième unité d'alimentation en pression (14) parvienne dans le deuxième circuit de freinage (BK2) via la première vanne d'isolement (TV1, BP1) et/ou
dans la deuxième conduite hydraulique (HL2), au moins une deuxième vanne d'isolement (TV2, TVBK2) est disposée comme vanne d'isolement (BP1, BP2, TV1, TV2),
sachant que la deuxième vanne d'isolement (TVBK2) est disposée de préférence de telle manière qu'un raccord de siège de vanne de la deuxième vanne d'isolement (TVBK2) soit relié hydrauliquement au deuxième circuit de freinage (BK2),
sachant que de préférence la première vanne d'isolement (BP1) ou la deuxième vanne d'isolement (TVBK2) est une vanne ouverte sans courant.

3. Système de freinage (2) selon l'une des revendications précédentes, **caractérisé par**
au moins une troisième vanne d'isolement (BP2) comme vanne d'isolement (BP1, BP2, TV1, TV2) qui est disposée et constituée de telle manière que dans un état fermé de la troisième vanne d'isolement (BP2), le premier circuit de freinage (BK1) soit découplé hydrauliquement de la première et de la deuxième unité d'alimentation en pression (6, 14),
sachant que la troisième vanne d'isolement (BP2) est disposée de préférence de telle manière qu'un raccord de siège de vanne de la troisième vanne d'isolement (BP2) soit relié hydrauliquement au premier circuit de freinage (BK1),
sachant que de préférence la troisième vanne d'isolement (BP2) et/ou la vanne d'admission (69) est une vanne ouverte sans courant.

4. Système de freinage (2) selon la revendication 2,
**caractérisé en ce que**
la première vanne d'isolement (BP1) est disposée de telle manière qu'un raccord de siège de vanne de la première vanne d'isolement (BP1) soit relié hydrauliquement à la deuxième vanne d'isolement (TVBK2) et, via une quatrième vanne d'isolement (74) comme vanne d'isolement (BP1, BP2, TV1, TV2), à la première unité d'alimentation en pression (6).

5. Système de freinage (2) selon l'une des revendications précédentes, en particulier selon la revendication 2,
sachant qu'un simulateur de course (28) qui est relié à la deuxième unité d'alimentation en pression (14) est prévu, sachant que le simulateur de course (28) présente de préférence deux éléments d'étanchéité (28a, 28b).

6. Système de freinage (2) selon l'une des revendications précédentes,
sachant que la troisième conduite hydraulique (HL3) est reliée à la première conduite hydraulique (HL1) et, en particulier via la première vanne d'isolement (TV1, BP1), à la deuxième conduite hydraulique (HL2).

7. Système de freinage (2) selon la revendication 4,
sachant que moyennant la quatrième vanne d'isolement (74), la première et la deuxième conduite hydraulique peut être isolée de manière réversible de la première unité d'alimentation en pression (6) et
la quatrième vanne d'isolement (74) est disposée et constituée de telle manière que la première et la deuxième conduite hydraulique (HL1, HL2) soit coupée de la première unité d'alimentation en pression (6) dans un état fermé de la quatrième vanne d'isolement (74),
sachant que la quatrième vanne d'isolement (74) est de préférence une vanne fermée sans courant.

8. Système de freinage (2) selon l'une des revendications précédentes, **caractérisé par** :
au moins une vanne de limitation de pression (80, ÜV) qui est de préférence en liaison fluidique avec la première unité d'alimentation en pression, en particulier son compartiment de travail.

9. Système de freinage (2) selon l'une des revendications précédentes,
sachant que la première conduite hydraulique (HL1) et/ou la deuxième conduite hydraulique (HL2) sont reliées au réservoir de stockage (40) via respectivement une vanne d'aspiration (70b, 70c).

10. Système de freinage (2) selon l'une des revendications précédentes,
sachant qu'un élément d'actionnement (26), en particulier une pédale de freinage, est disposée au niveau de la deuxième unité d'alimentation en pression (14), sachant que le piston (24) peut être actionné moyennant l'élément d'actionnement (26).

11. Système de freinage (2) selon l'une des revendications précédentes,
sachant que le réservoir de stockage (40) présente un capteur de niveau (NST) qui est constitué pour saisir un niveau de remplissage de l'agent de pression à l'intérieur du réservoir de stockage (40), sachant que de préférence un flotteur pourvu d'un aimant, et dont la position peut être saisie sans fil, en particulier via la saisie d'un champ magnétique, est disposé à l'intérieur du réservoir de stockage.

12. Système de freinage (2) selon la revendication 11,
**caractérisé en ce que**
une unité de commande du système de freinage (2) est constituée pour, sur la base de signaux du capteur de niveau, effectuer un diagnostic servant à déterminer l'étanchéité de garnitures d'étanchéité, en particulier de garnitures d'étanchéité de la première et/ou de la deuxième unité d'alimentation en pression (6, 14), et/ou à déterminer une fuite,
sachant que de préférence l'entraînement électromoteur (8) de la première unité d'alimentation en pression (6) présente un raccord électrique (B1, B2) triphasé redondant destiné à être piloté par l'unité de commande (48).

13. Système de freinage (2) selon l'une des revendications précédentes, **caractérisé en ce que**
la première unité d'alimentation en pression (6) avec une première unité de vérin à piston, et la deuxième unité d'alimentation en pression (14) avec une deuxième unité de vérin à piston, est disposée dans un boîtier de telle manière qu'un axe longitudinal (L6) de la première unité de vérin à piston soit sensiblement perpendiculaire à un axe longitudinal (L14) de la deuxième unité de vérin à piston.

14. Procédé de commande d'un système de freinage (2) selon l'une des revendications précédentes, comprenant les étapes :
a. fourniture d'une première pression au niveau d'un premier point de raccordement destiné à être relié à un premier circuit de freinage (BK1) ;
b. fourniture d'une deuxième pression au niveau d'un deuxième point de raccordement destiné à être relié à un deuxième circuit de freinage (BK2) ;
c. détection d'un premier cas d'erreur, en particulier la perte d'agent de pression dans le premier circuit de freinage (BK1) ;
d. fermeture d'au moins une première vanne d'isolement (BP1) en réaction à la détection du premier cas d'erreur de telle manière qu'une première unité d'alimentation en pression (6) soit découplée hydrauliquement du premier point de raccordement.

15. Procédé selon la revendication 14,
**caractérisé par** :
le fait de diagnostiquer une étanchéité de la première vanne d'isolement (BP1) par :
- une fermeture de la première vanne d'isolement (BP1) et d'une deuxième vanne d'isolement (TVBK2) et
- une montée en pression moyennant la première unité d'alimentation en pression (6) et
- une mesure d'une pression au moins sur un intervalle de temps spécifié.

16. Procédé selon la revendication 14 ou 15,
**caractérisé par** :
une détection d'un deuxième cas d'erreur, en particulier d'une panne au moins partielle d'une unité ESP, de préférence d'une troisième unité d'alimentation en pression, sachant qu'en réaction à la détection du deuxième cas d'erreur ont lieu :
- une lecture de signaux de mesure de l'unité ESP via au moins un bus, en particulier un bus CAN (CAN) ;
- une implémentation d'une stratégie de commande, en particulier pour des vannes de l'unité ESP, compte tenu des signaux de mesure.

17. Procédé selon l'une des revendications 14 à 16,
**caractérisé par** :
- une détection d'un troisième cas d'erreur, en particulier d'une panne de la première unité d'alimentation en pression (6) et/ou d'une panne du deuxième circuit de freinage (BK2), sachant qu'en réaction à la détection du troisième cas d'erreur ont lieu :
- une commande de vannes de telle manière que le premier circuit de freinage (BK1) puisse être soumis à de l'agent de pression provenant de la deuxième unité d'alimentation en pression (14) pour freiner un premier essieu, en particulier un essieu avant (VA), d'un véhicule ; et
- un pilotage simultané d'un électromoteur de véhicule (TM1) au niveau d'un deuxième essieu pour freiner le deuxième essieu.
